# EUROPEAN PATENT SPECIFICATION

(11) **EP 0 795 206 B1**
(45) Date of publication and mention of the grant of the patent: **14.04.1999**
(21) Application number: 95938371.2
(22) Date of filing: 28.11.1995
(51) Int. Cl.: H01M 10/50, H01M 10/44

(54) **A METHOD AND AN APPARATUS FOR CONTROLLING BATTERY TEMPERATURE DURING CHARGING/DISCHARGING**
VERFAHREN UND VORRICHTUNG ZUR STEUERUNG DER BATTERIETEMPERATUR WàHREND DES AUF-/ENTLADENS
PROCEDE ET APPAREIL DE REGULATION DE LA TEMPERATURE D'UNE BATTERIE AU COURS DU PROCESSUS DE CHARGE ET DE DECHARGE

(30) Priority: 28.11.1994 DK 135894; 30.01.1995 US 382215
(43) Date of publication of application: 17.09.1997
(73) Proprietor: CHARTEC LABORATORIES A/S, 2920 Charlottenlund (DK)
(72) Inventor: JUUL-HANSEN, Ebbe, Deceased (DK); REIPUR, John, DK-2930 Klampenborg (DK); RASMUSSEN, Kim, DK-2750 Ballerup (DK)
(74) Representative: Plougmann, Vingtoft & Partners A/S
(86) International application number: DK9500477
(87) International publication number: WO9617397

(56) References cited:
- EP-A- 0 512 340
- WO-A-89/09497
- CH-A- 662 448
- DE-A- 2 559 364
- DE-A- 3 620 041
- DE-A- 4 017 475
- DE-A- 4 027 149
- US-A- 4 238 721
- US-A- 4 416 000
- US-A- 4 585 712
- ELEKTROTECHNISCHE ZEITSCHRIFT - ETZ, vol. 106, no. 11, June 1985, BERLIN DE, pages 552-558, XP002000046 G.LOOCKE ET AL: "Induktive Beheizung von Kraftfahrzeug-Startbatterien"

## Description

The present invention relates to controlling the temperature of a rechargeable lithium battery during charging or discharging and, more particularly, to optimize the charging or discharging process of such batteries. The invention also relates to a battery system for performing the method.

Rechargeable storage cells or batteries are electrochemical devices for storing and retaining an electrical charge and later delivering that charge as useful power. A battery may typically have a number of storage cells connected together to form a battery having specific voltage or current delivery capability. A familiar example of a rechargeable battery is the nickel-cadmium, NiCd, battery used in portable electronic devices such as cameras and mobile telephones.

When charging a rechargeable battery, such as a NiCd battery, an electrical voltage greater than the terminal voltage of the battery may be applied to the terminals of the battery whereby a current will run through the battery. This current initiates a chemical process by which energy is stored in the battery.

Frequently, the charging period for a battery is desired to be as brief as possible, which has lead to the use of greater and greater charging currents. This may accelerate the heat-generating process within the battery which again may cause chemical destruction of the battery, and therefore it is important to interrupt charging at the proper time. The art includes some methods which attempt to ensure optimum charging with high charging currents where the charging process is stopped at the proper time before the heat generation within the battery becomes too high. Such methods are described in WO 92/15142 and WO 94/05068.

However, when charging a rechargeable battery at high current rates, it has been recognized that the temperature of the battery cells should be high enough to ensure that the chemical process, which converts the charging current to energy within the battery, will be able to react fast enough to allow a desired high charging current. Under normal circumstances, this is not a problem for NiCd batteries or cells although it has been found that for low battery temperatures, for example below 0 °C, the maximum allowed charging current should be reduced as when compared to charging at a higher battery temperature such as 25 °C.

However, for other types of rechargeable cells, it has been found that in order to allow a high charging current for a major part of the charging period and, thus, obtaining a short charging period of time when charging a cell, the temperature of the battery cells should be increased above usual ambient temperature. Furthermore, it has been recognized that for such types or similar types of cells, the cells may dissipate heat during both charging and discharging. Thus, as the dissipated heat represents energy, the discharging capacity of the cells may vary with the thermal dissipation of energy, which again may vary with the outer temperature of the cells during discharge. This type of cells may comprise lithium cells, such as lithium ion cells, which for example may be LiCoO₂, LiNiO₂, Li₂Mn₂O₄, LiₓV₂O₅ and LiₓV₅O₁₃, and lithium polymer cells. The problem is thus to ensure an optimum battery or cell temperature during charging; likewise, there is also a problem in obtaining an optimum battery or cell temperature during discharging.

When charging a rechargeable battery cell such as a lithium cell, it is well known that it is very important to prevent overcharge of the individual cells within the battery. An overcharge-preventing device is described in EP 0 512 340. However, the system described in EP 0 512 340 terminates caring when one of the cells in a battery pack comprising several cells connected in series reaches a predetermined maximum cell voltage, which may be defined by the battery component materials and the battery design. Thus, as the individual cells may have different charging and discharging characteristics, not all cells will be charged to the same degree by the system disclosed in EP 0 512 340.

Therefore, there is a need for an improved overcharging device or system which balances the charging of the individual cells during charging. Such a charge-balancing system is disclosed in US 5,283,512 and in US 4,238,721. The system described in US 5,283,512 and in US 4,238,721 measures the voltage of each individual cell during charging, and when a cell has reached the predetermined maximum cell voltage, the charge current is by-passed around that cell.

However, not EP 0 512 340 nor US 5,283,512 nor US 4,238,721 has any mentioning of controlling the cell temperature in order to maximize charging and discharging of the battery or cells. Thus, there is a need for an improved charge-balancing and overcharge-preventing method and system which may also control the temperature of the battery cells during charging and/or discharging.

From DE 36 20 041 it is known to sense the temperature of the a NiCd-battery to be charged, and to either heat or charge the NiCd-battery, however, no heat insulation is provided for heat insulation of the battery.

Further in DE 40 17 475 and in US patent no. 4,416,000 as well as in Electrotechnische Zeitschrift vol. 106, no. 11, p. 552-558, methods for charging a rechargeable battery by supplying energy to the battery by means of an electrical current wherein a heat insulating material is arranged around the battery are disclosed. But only US 4,416,000 discloses charging of a lithium battery. The lithium battery of US 4,416,000 is, however, a high temperature molten salt battery operating at temperatures of 400-500 °C.

Because lithium batteries of a type that may be charged at a temperature in the temperature range 30-60 °C are very sensitive to overheating which may cause the battery to enter a run-away condition and blow up, a person skilled in the art would expect that a heat-insulating layer around a lithium battery would work in the wrong direction.

There is thus a need for a carefully controlled heating and/or heat insulating, during charging and/or discharging of a lithium battery, such as a lithium ion battery, of a type that may be charged at a temperature within the temperature range 30-60 °C, to optimize the battery charging.

The present invention provides a solution to the above mentioned problems.

A solution is achieved according to the invention by a method of charging a rechargeable lithium battery, such as a lithium ion battery which may comprise one or more cells, of a type that may be charged at a temperature within the temperature range 30-60 °C, in which method energy is supplied to the battery by supplying an electrical current to the battery so as to charge the same. The supplied charging current may generate heat within the battery during the charging process, and this charging-generated heat may be sufficient to maintain the outer temperature of the battery within a predetermined range during a major part of the charging process. However, it is preferred to supply heat-generated energy to the battery in addition to the energy supplied to the battery by the charging current so as to maintain the outer temperature of the battery within the predetermined range during a major part of the charging process. Here, the battery may be a single battery cell or several battery cells if the battery is formed by several battery cells.

When the outer cell temperature is increased to a predetermined range by a method according to the present invention, it may be possible to supply a high charging current to the battery or cells for an increased amount of time, which amount of time may be a function of the outer cell temperature. Thus, a more efficient charging process and a shorter overall charging period may be achieved by controlling the outer battery or cell temperature to be within a pre-selected range.

It is preferred that the heat-generated energy is delivered to the battery so as to obtain an outer temperature of the battery within the predetermined range during the initial phase of the charging process or prior to initiating the charging process.

For the lithium batteries of the invention, such as a lithium ion batteries which may comprise one or more lithium ion cells, the outer cell temperature may be in the range of 30-60 °C, preferably 40-50 °C, and more preferred in the range of 41-46 °C. It should be understood that the purpose of maintaining a relatively high outer cell or battery temperature during the charging process is to be able to allow a high charging current for a major part of the charging process and thus a shorter overall charging time.

If the battery comprises more than one cell, it is preferred that the temperature of the battery is controlled so that the outer temperature of each cell is maintained mainly at the same value during the charging process in order to match the charging of each cells.

Preferred examples of battery packs are described in the discussion given in connection with the figures. Thus, it is preferred that the battery or cells is/are packed in a heat-insulated battery pack with heat-generating components arranged within the battery pack. The heating components may be the battery cell or cells themselves, but in addition heat-generated energy may be supplied by at least a part of a charging circuitry arranged within the battery pack or by at least part of a special-purpose heat-generating circuitry arranged within the battery pack.

When a battery comprising more than one cell is charged according to the present invention, it is preferred that the battery is charged using a voltage-balanced charging process so that the voltage of each cell is about to reach the same maximum cell voltage. The voltage of each cell may be surveyed during the charging process, and it is preferred that when the voltage of a cell reaches a predetermined maximum cell voltage, the charging current to this cell is reduced and the charging process is controlled so that the cell voltage is maintained about the maximum cell voltage during the remaining charging period. The charging process may be continued until the cell is fully charged, however, it may also be preferred that the cell is only charged to a certain degree of its full capacity such as 60%, 70%, 80% or 90%.

It is preferred that the balanced charging process is controlled so that each cell is charged to about the same capacity or about the same degree of its full capacity, preferably each cell should be charged to its full capacity. The balanced charging may be controlled so that the surveyed or measured voltages of the cells are mainly equal to each other during a major part of the charging process; this part of the charging process may also include a first phase of the charging process where none of the cells have yet reached the maximum cell voltage. If the surveyed voltage of a first cell is increased above the surveyed voltage of a second cell, it is preferred that the first cell is being discharged for a period of time while the second cell is still being charged, so that after the discharging period of time, the two cells may be further charged at about the same cell voltage level.

The charging circuitry for controlling the balanced charging may comprise more than one by-pass device in order to by-pass the charging current for each individual cell, so that each cell may be charged to the same degree of the cell capacity without any overcharge of the cells. The by-pass devices may comprise components which are heated by the by-passed current, and, thus, the heating of these components may also be used in maintaining a predetermined outer cell temperature or temperature interval. If one of the cells is discharged during the charging process, the discharged current may also be led through a sort of by-pass device, and this by-pass device may be heated by the discharging current.

For some types of cells, the inner cell temperature increase is larger during discharging than during charging. Thus, the temperature within a battery pack and thereby the outer cell temperature may be controlled by having at least one discharging period for at least one cell during the charging period. In addition to the heat generated within the cells, heat generated within part of the charging circuitry arranged within the battery pack may also add to the external heating of the battery cells. As mentioned above, a special-purpose heat-generating circuitry may be arranged within the battery pack, and the heat-generating current supplied to this circuitry may be controlled so as to generate sufficient heat in order to maintain the predetermined outer cell temperature or temperature range if or when the heat dissipates from the cells and/or the charging circuitry is insufficient to maintain the desired outer cell temperature.

The present invention also relates to a method of discharging a rechargeable lithium battery comprising the steps of withdrawing electrical energy from the battery for discharging the same, and supplying heat-generated energy to the battery or maintaining heat generated within the battery, so as to increase the outer temperature of the battery during at least part of the discharging process.

As heat may be generated within a battery or battery cell during the discharging process, the thermal energy loss from the battery cell may be minimized by having a heat-insulating layer around at least part of the battery cell. In such a case, the internal generated heat will cause the outer cell temperature to rise due to the small thermal loss, and this may be sufficient to obtain an improvement in the discharging capacity of the cell as when compared to a cell without heat insulation. Thus, at least part of the heat-generated energy may be supplied by spontaneous heating or internal heating of the battery during the discharging process.

If the battery cell is packed in a battery pack, which battery pack may just be a heat-insulating layer, the increase in the outer temperature of the battery may be obtained during at least part of the discharging process by feeding current from the battery to an electric circuitry or component arranged within the battery pack or between the battery cell and the heat-insulating layer, where said circuitry or component is heated by the supplied current.

It is also preferred that an electric circuitry or component arranged within the battery pack or between the battery cell and the heat-insulating layer is heated by a current supplied from an external current source. This external current may be supplied during the discharging process, but it is preferred that the external current is supplied before the initiation of the discharging process so that the outer cell temperature may have reached a predetermined temperature range before the discharging process is started, whereby the discharging capacity of the battery cell may be improved.

The present invention furthermore provides a battery pack with one or more battery cells forming a rechargeable battery, where the battery pack comprises a layer of a heat-insulating material at least partly surrounding the battery so as to maintain within the battery pack at least part of the energy generated by spontaneous heating or internal heating of the battery during discharging or charging. This battery pack may be part of a battery system. Preferably, the battery pack further comprises a heat-conductive material arranged between the battery cells and the heat-insulating layer, which heat-conductive layer at least partly surrounds the battery cell or cells.

It is preferred that such a battery pack and/or system is used in one or more of the above-mentioned methods of charging and discharging. Thus, the battery pack or system may further comprise an electric circuitry or component adapted to supply electric energy in the form of current generated heat to the battery pack so as to increase the outer temperature of the battery cell or cells when said energy is supplied. It is also preferred that the electric circuitry comprises at least part of a battery charging system arranged within the battery pack. This part of the charging system may comprise one or more by-pass devices adapted to by-pass charging current supplied by the charging system to at least one battery cell during a charging process.

In addition to the by-pass devices, the electric circuitry may further comprise at least one electric component, said component being arranged within the battery pack and being adapted to deliver current-generated heat to the battery pack when the heat generated by the by-pass devices and/or by spontaneous heating within the cells is insufficient to maintain the outer temperature of the battery within a predetermined temperature range. It is preferred that the battery charging system is adapted to by-pass the charging current around one of the battery cells when a voltage measured across said one battery cell is equal to or larger than a preselected maximum cell voltage.

Embodiments and details of the system appear from the claims and the detailed discussion of embodiments of the system given in connection with the figures.

The invention will now be described in further detail in connection with the drawings in which
Fig. 1 shows the charging curves for a lithium ion cell with an outer cell temperature in the range of 42 to 46 °C,
Figs. 2 and 3 show the discharging curves for a cell charged according to the charging process of Fig. 1 with the outer cell temperature in the range of 44 to 47 °C and 25 to 30 °C, respectively,
Fig. 4 shows the charging curves for the lithium ion cell of Fig. 1 with an outer cell temperature in the range of 4 to 11 °C,
Fig. 5 shows the discharging curves for a cell charged according to the charging process of Fig. 4 with the outer cell temperature in the range of 24 to 28 °C,
Fig. 6 shows the charging curves for the lithium ion cell of Fig. 1 with an outer cell temperature in the range of 4 to 8 °C,
Fig. 7 shows the discharging curves for a cell charged according to the charging process of Fig. 6 with the outer cell temperature in the range of -1 to 4 °C,
Fig. 8 shows the charging curves for the lithium ion cell of Fig. 1 with an outer cell temperature in the range of 39 to 42 °C,
Fig. 9 shows the discharging curves for a cell charged according to the charging process of Fig. 8 with the outer cell temperature in the range of 1 to 17 °C,
Figs. 10-12 show battery systems according to the invention,
Figs. 13-19 show balanced charging systems for use in a method or a battery system according to the invention,
Fig. 20 shows a flow chart diagram of a charging process according to the invention,
Fig. 21 shows a flow chart diagram of a discharging process according to the invention,
Fig. 22 shows the discharging curves for an insulated lithium ion cell with an ambient temperature of -3°C,
Fig. 23 shows the discharging curves for a non-insulated lithium ion cell with an ambient temperature of -3°C, and
Fig. 24 shows the discharging curves for a non-insulated NiCd battery with an ambient temperature of -3°C.

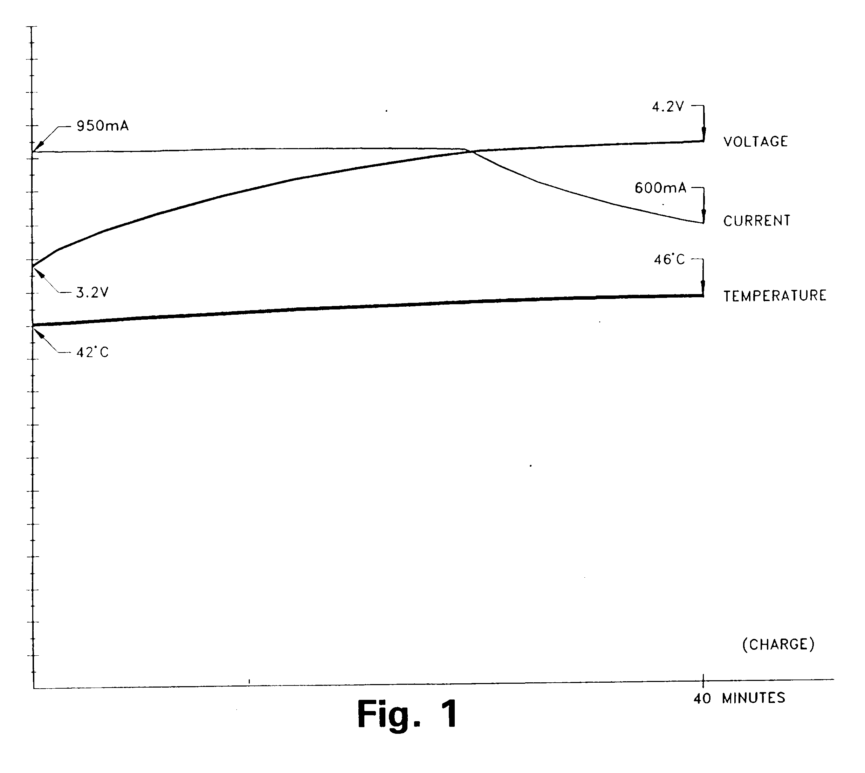

Fig. 1 shows the charging curves for a lithium ion cell of the LiCoO₂ type where the outer temperature of the cell is controlled so as to be in the range of 42 to 46 °C. The charging process is controlled so that a nearly constant charging current of 950 mA is supplied to the cell until a predetermined maximum cell voltage Vmax is reached. This maximum voltage is given by the manufacturer of the battery cell to be 4,2 Volts. Here, overcharge of the cell should be avoided in order to avoid damage of the cell. When Vmax is reached, the charging process is controlled so that the charging current is decreased but the cell voltage is maintained around Vmax until termination of the charging process. In the example shown in Fig. 1, the charging process is terminated after 40 minutes. A charging period of 40 minutes is also chosen for the following charging examples.

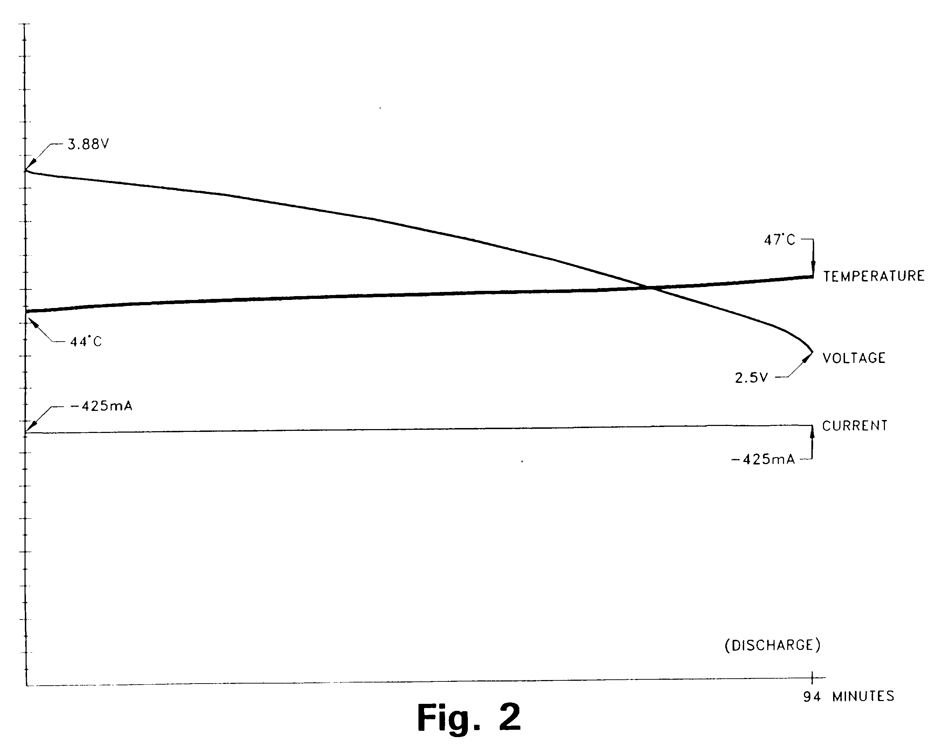

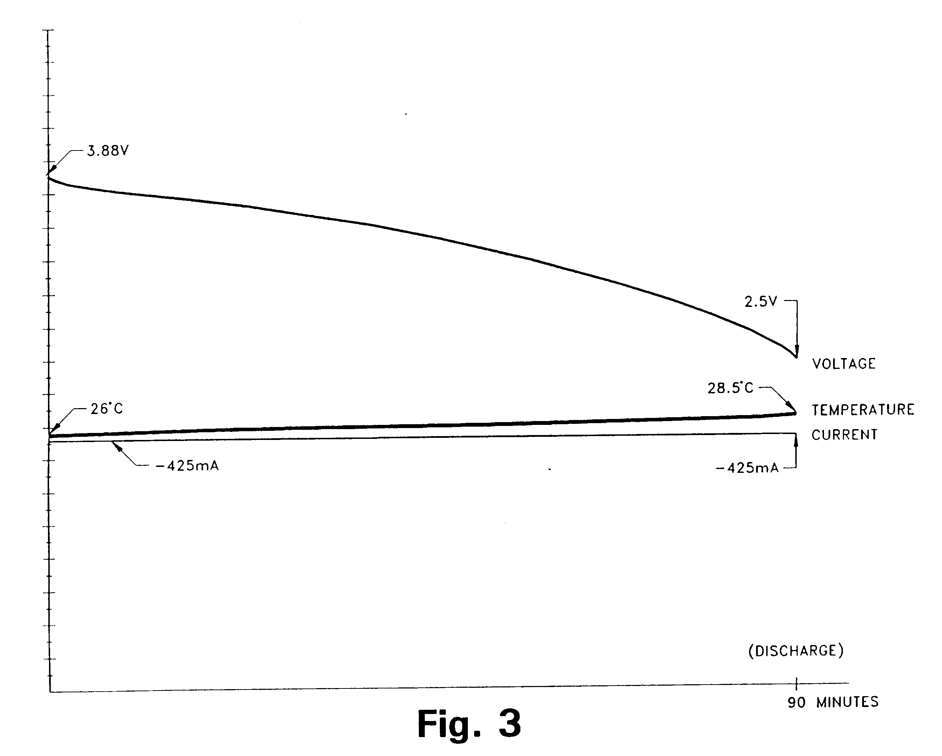

Figs. 2 and 3 show discharging curves for the charged cell of Fig. 1. In Figs. 2 and 3, the outer cell temperature is controlled to be in the range of 44 to 47 °C and 25 to 30 °C, respectively, the cell is discharged by an almost constant current of 425 mA, and the cell is discharged from a cell voltage of 3.88 Volts to a minimum cell voltage Vmin, which is given by the manufacturer of the battery cell to be 2.5 Volts. Overdischarge of the cell should be avoided in order to avoid damage of the cell. It should be noticed in this connection that the discharging time is approx. 94 minutes in Fig. 2 while the discharging time is lowered to approx. 90 minutes in Fig. 3 corresponding to a lowering in the cell capacity. As the cell has been charged to the same degree in both cases, the difference in cell capacity might be explained by the difference in the outer cell temperature during discharging.

As the lithium cell itself is expected to generate heat within the cell during the discharging process, this self-generated heating also being called spontaneous heating, a difference in outer cell temperature will correspond to a difference in temperature gradients within the cell, and, thus, to a difference in thermal-energy dissipation during the discharging process. If a part of the stored chemical energy is lost as heat, a smaller part of the chemical energy is left to be converted to electrical energy, resulting in a lowering of the cell capacity.

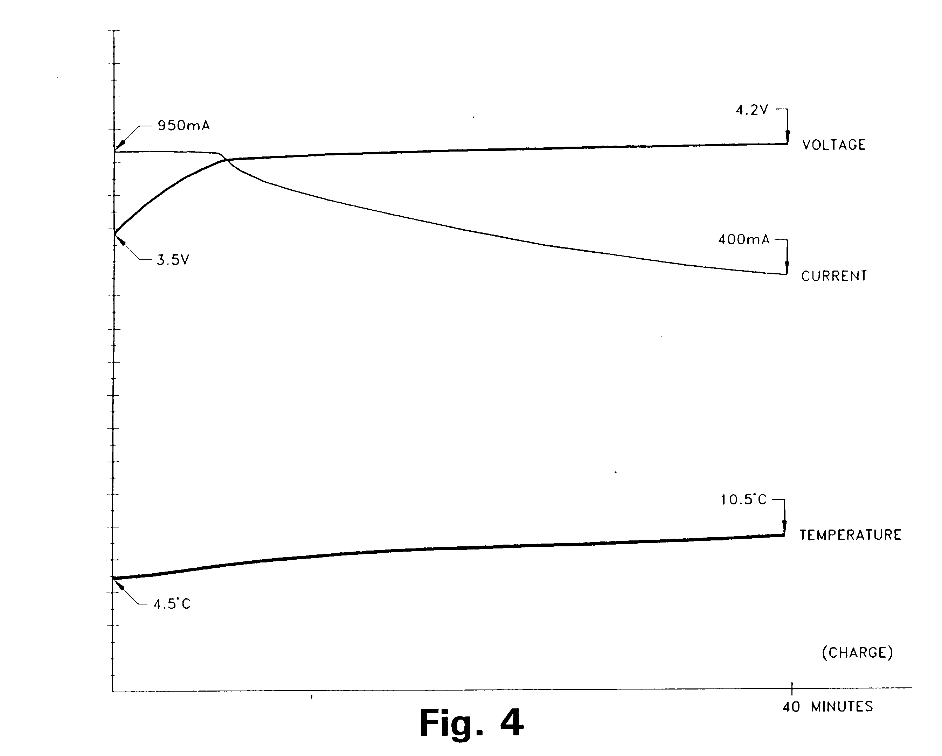

Fig. 4 shows the charging curves for the lithium ion cell of Fig. 1 when the outer cell temperature is controlled so as to be in the range of 4 to 11 °C. Here, the maximum charging current of 950 mA is only supplied to the cell for a relatively short period of time as Vmax of 4.2 Volts is reached rather quickly as when compared to the charging curves of Fig. 1. Thus, when the outer cell temperature is lowered during charging, the maximum cell voltage may be reached at an early stage in the charging process resulting in a lowering of the charging voltage and a lowering in the supplied energy to the cell. The cell charged in accordance with Fig. 4 should therefore be charged to a lower degree of its full capacity than when charged in accordance with Fig. 1.

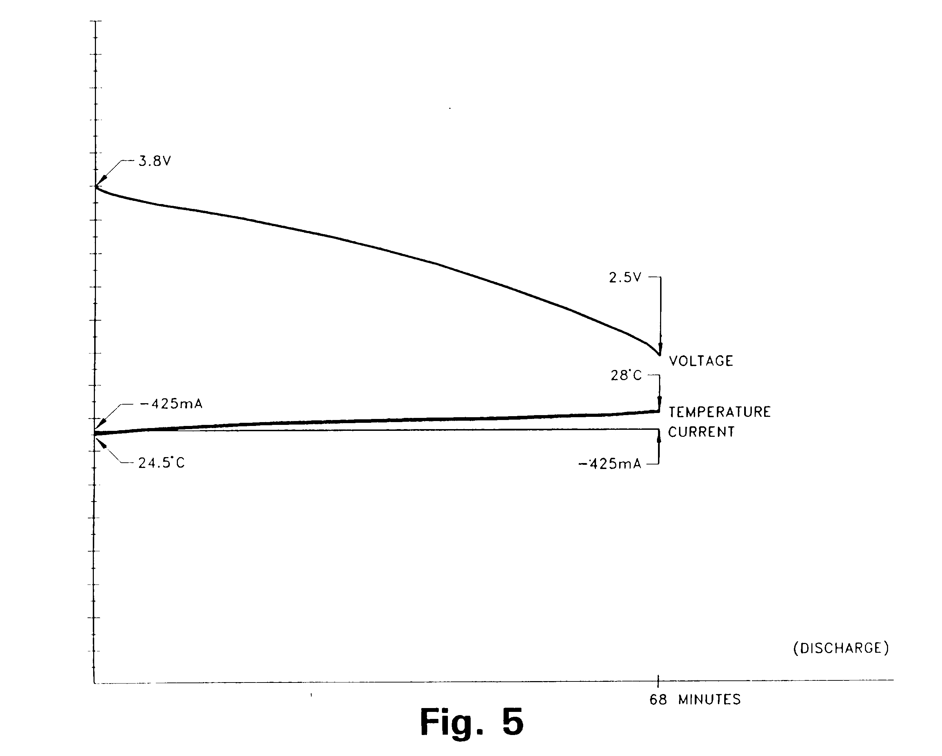

This is illustrated in Fig. 5 which shows the discharging curves for a cell charged according to the charging process of Fig. 4. In Fig. 5, the outer cell temperature is controlled so as to be in the range of 24 to 28 °C, corresponding to the discharge process shown in Fig. 3. When comparing the curves of Figs. 3 and 5, the minimum cell voltage is reached after 68 minutes in Fig. 5 compared to 90 minutes in Fig. 3, and it is clearly illustrated that the cell has not been charged to the same degree by the process of Fig. 4 as when charged according to the process of Fig. 1.

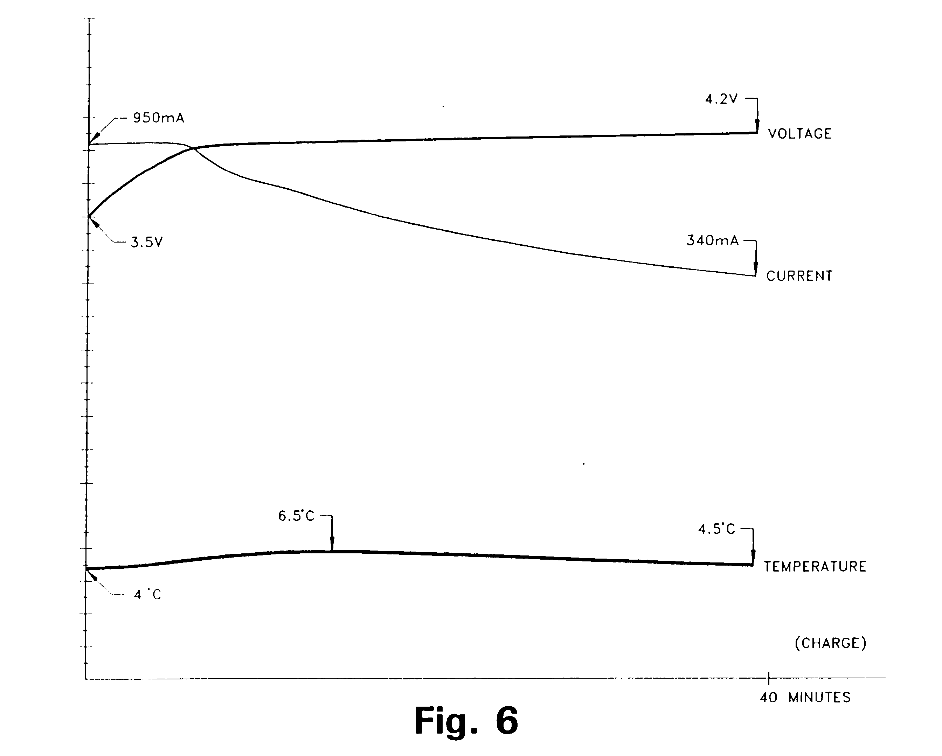

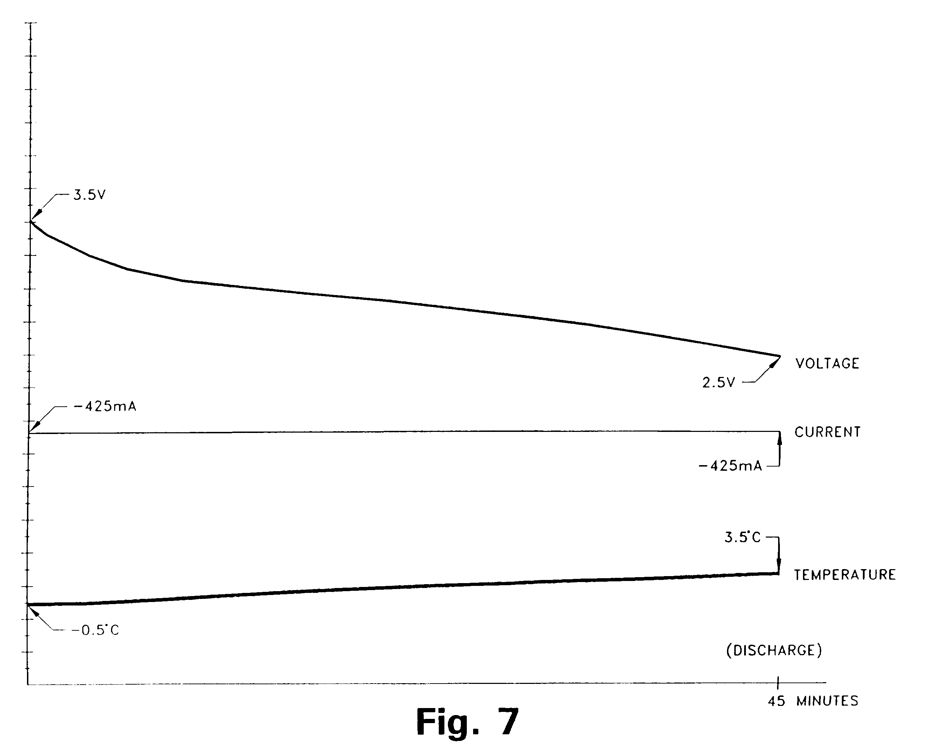

Fig. 6 shows the charging curves for a charging process similar to the process shown in Fig. 4, and Fig. 7 shows the discharging curves for a cell charged according to the charging process of Fig. 6. In Fig. 7, the outer cell temperature is controlled so as to be in the range of -1 to 4 °C, which is much lower than the temperature range of the discharging curves of Fig. 5. When comparing the curves of Figs. 5 and 7, the discharging time of Fig. 7 is 45 minutes whereas it is 68 minutes in Fig. 5. Thus, a significant reduction in the cell capacity is observed when the cell temperature is lowered about 25 °C during discharging.

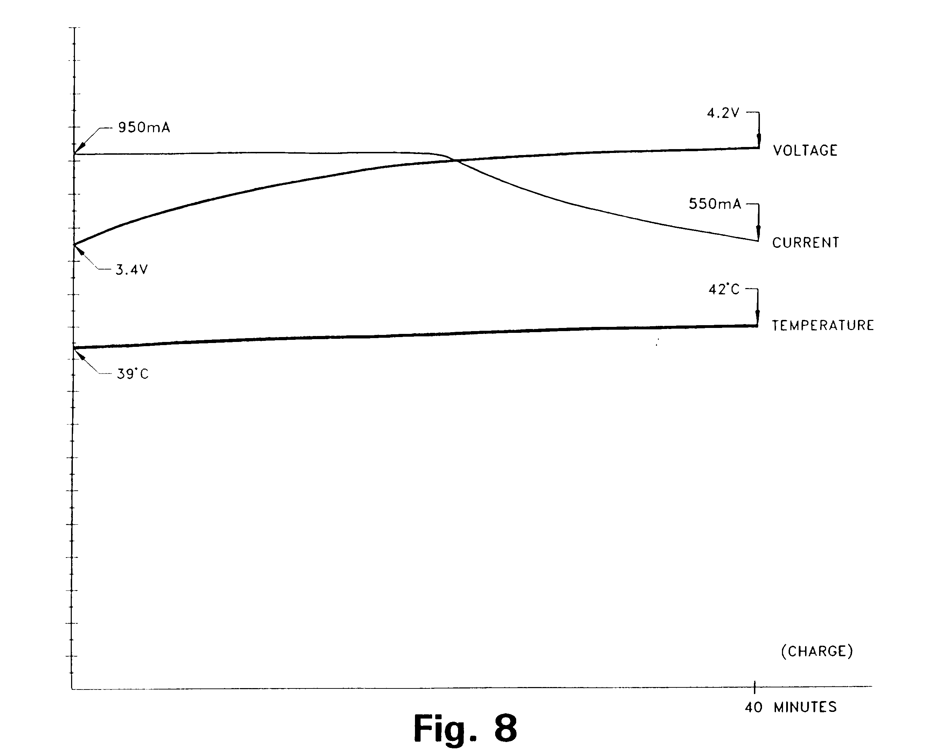

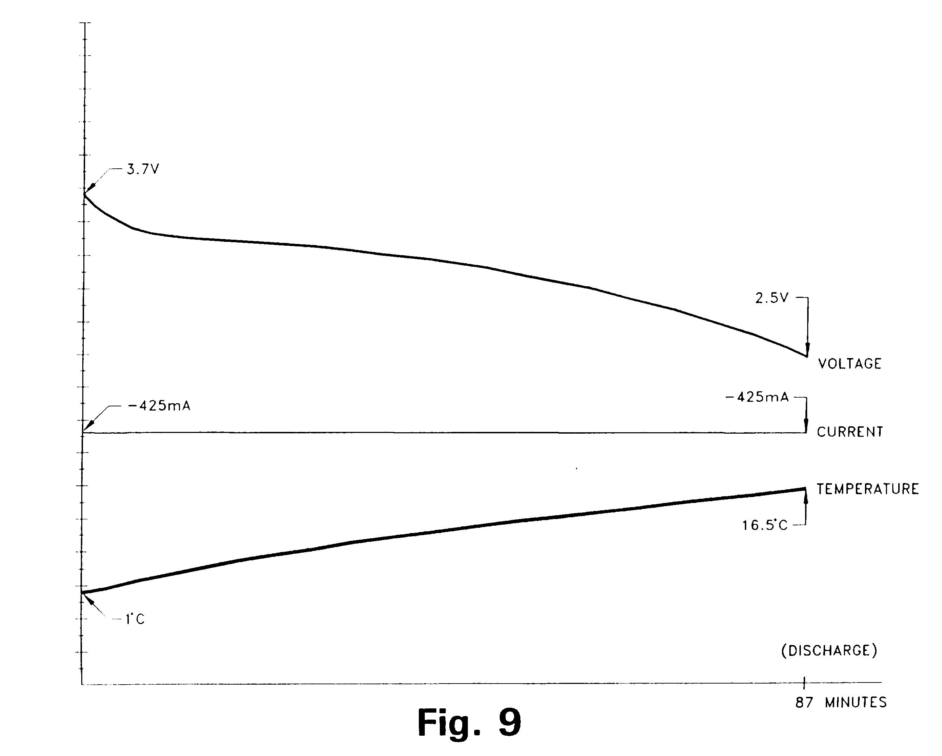

Fig. 8 shows the charging curves for a charging process similar to the process of Fig. 1, and Fig. 9 shows the discharging curves for a cell charged according to the charging process of Fig. 8. In Fig. 9, there is no controlling of the outer cell temperature, but the cell is packed in a heat-insulated battery package and cooled to a temperature around 1 °C before the discharging process is started. The temperature increase observed in Fig. 9 is due to the self-generated heating of the cell. When compared to Fig. 3 the capacity has been lowered a bit from 90 minutes to 87 minutes, showing that an efficient heat insulation of the cell might reduce the loss of self-generated heat from the cell, and the generated heat will be used to warm up the battery cell, which again may result in an increased discharging cell capacity.

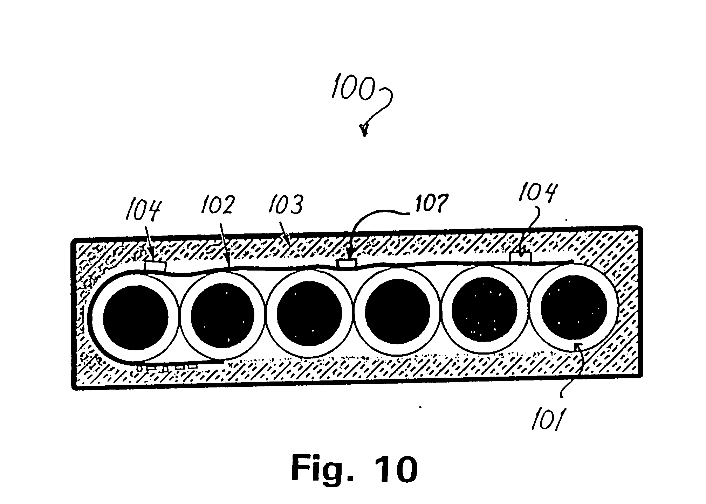

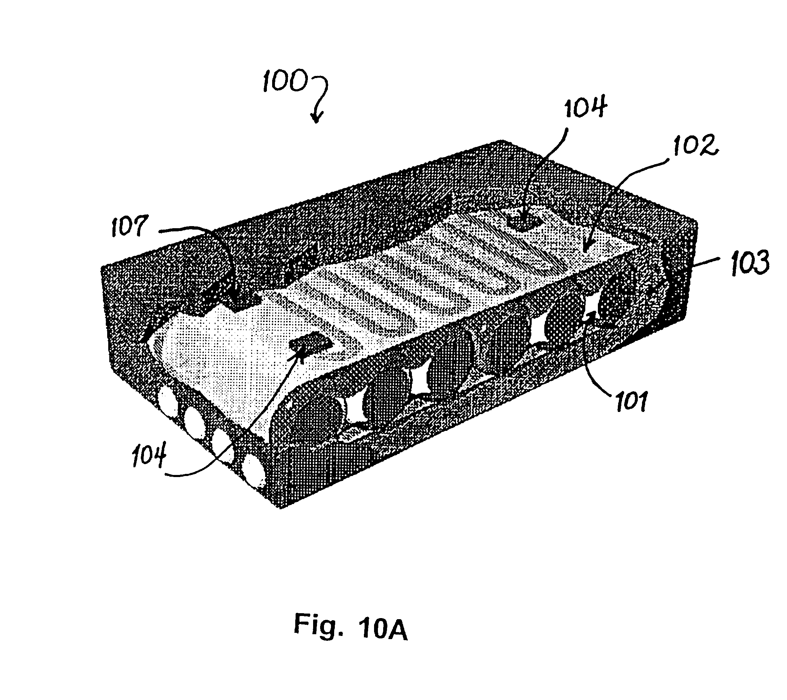

Preferred embodiments of a heat-insulated battery system according to the invention are shown in Figs. 10, 10A, 11, 11A and 12. In these embodiments a battery pack 100 comprises one or several battery cells 101, which may be at least partly surrounded by a heat-conductive layer 102. It is also preferred that the cells and/or the heat-conductive layer are/is at least partly surrounded by a heat-insulating layer 103 in order to prevent heat dissipation from the battery pack. In order to control the temperature of the heat conductive layer and/or the outer temperature of the cells, one or more heating components 104 may be arranged in the battery pack. The heating components may preferably be resistors which may be arranged on the heat-conductive layer 102. The heat-conductive layer 102 may alternatively also be designed as a heating component itself. In order to control the outer temperature of the cell or cells, a temperature sensor is preferably arranged within the battery pack. Here it is preferred that the temperature sensor is arranged so as to measure the outer temperature of one or more cells and/or the temperature of the heat conductive layer.

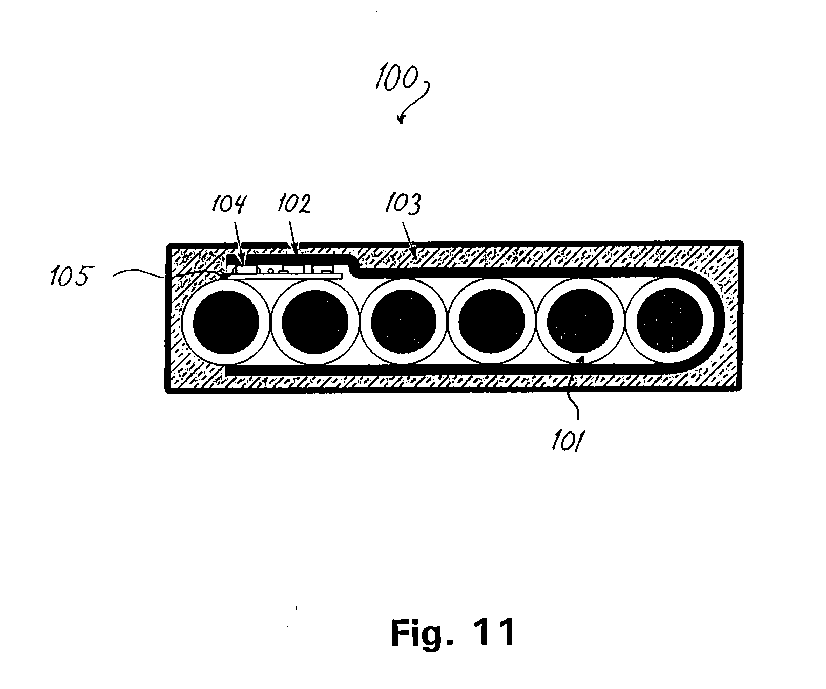

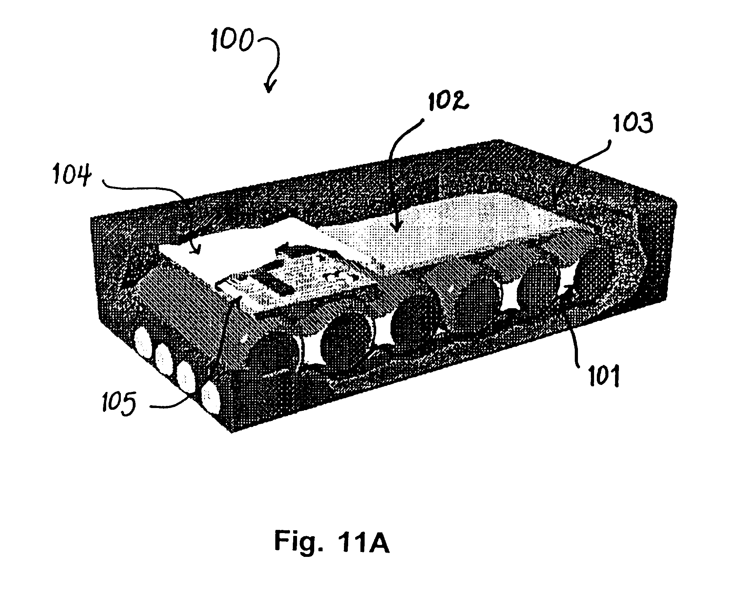

In order to control the outer cell temperature or in order to supply current to a heating component or circuitry 104 during a charging or discharging process, the battery system should also include a current-supplying system; the current-supplying system may in a preferred embodiment comprise a control circuit for determining the outer cell temperature by measuring this temperature and controlling the current delivered to the heat dissipating component or components by the current-supplying system. Such a control circuit or system may be included in the battery pack 100 (Figs. 11 and 11A). Electric circuitry or components included in the battery may be arranged on a flexible printed circuit board 105, which may be of a heat-conductive material and may be arranged in close connection with the battery cell or cells and/or the heat conductive layer 102.

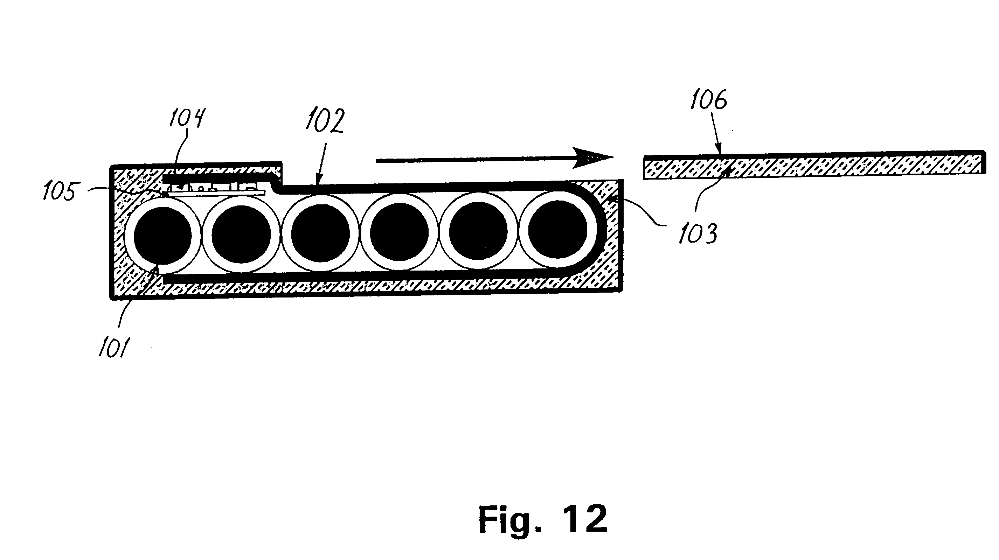

In Fig. 12 is shown a preferred embodiment of a battery pack, wherein a part 106 of the battery pack may be removed from the battery pack when the battery is used or inserted within a heat-generating device or apparatus such as a computer. Thus, when the part 106 is removed, heat may be supplied from outside the battery pack and help maintaining a high outer cell temperature. If preferred, it may also be possible to cool the battery cells when the part 106 is removed if the outer cell temperature is too high.

It is also preferred that a layer of a heat-reflecting material is included in the battery packs of Figs. 10-12 and at least partly surrounding the cells.

When several cells are included in a battery, the cells are usually connected in series in order to obtain a high resulting battery voltage. However, the cells within the battery may have different characteristics; for example, the storage capacity as well as the internal resistance may vary for different cells. This may have the result that when charging a series connection of cells until a maximum battery voltage is reached, some of the cells having a high capacity will not be fully charged while cells having a low capacity might be overcharged. Furthermore, a cell which is not charged to the same degree as other cells within the series connection may be overdischarged and thereby damaged during discharging of the battery. Thus, subsequent overcharging and overdischarging of the battery cells may result in a degradation in the total battery capacity and further result in a shorter lifetime of the battery.

One way to achieve a battery having a long lifetime would be to select the individual cells so that each cell within the battery would have the same cell capacity. However, this is not very practical and the solution according to the present invention is to connect an electric circuitry to the battery, which circuitry should be able to ensure that the individual cells are charged to about the same degree without being overcharged. Furthermore, if the individual cells within a battery pack are all fully charged or all charged to about the same degree of the full capacity, each cell will mainly follow the same voltage curve during the following discharge procedure. Thus, if the cells are charged by a balanced charging system, overcharge should be avoided but also overdischarge may be avoided.

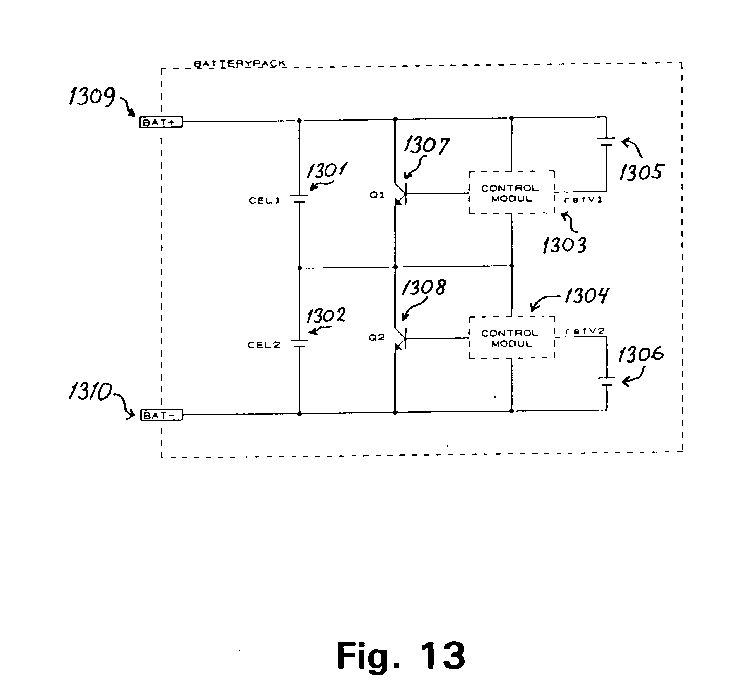

Figs. 13-18 show examples of such balanced charging systems to be used in a method or a battery system according to the invention.

The charging system shown Fig. 13 is arranged within the battery pack and may be included on the flexible printed circuit board 105. In Fig. 13 the battery comprises 2 cells, 1301 and 1302, two control modules, 1303 and 1304, two reference voltage devices, 1305 and 1306, and two by-pass devices, 1307 and 1308. The external power supply is connected to voltage inputs 1309 and 1310. During a charging process the control module 1303 compares the voltage of the cell 1301 with a predetermined reference voltage refV1, and when refVl is reached, the control module regulates the by-pass device 1307 so that part of the charging current to the cell 1301 is lead through the by-pass device 1307. It is preferred that the by-passed current is controlled so that the charging voltage of the cell 1301 is maintained at refVl once refVl has been reached. It is furthermore preferred that once refVl has been reached, the charging process is terminated after a period of time, which may be a function of the time consumed from initiating the charging procedure to the point in time at which the cell voltage is about to be equal to refV1. The control module 1304 will follow the charging procedure described above for the cell 1302 with reference to a voltage refV2.

It is preferred that the voltage refV1 is the same as the voltage refV2. The by-pass devices may for example be transistors. The control modules 1303 and 1304 may comprise analog circuitry but may also comprise a microprocessor.

When controlling a balanced charging, it may be preferred to control the charging of each cell in response to another characteristic charging parameter than the above-mentioned cell voltage. Thus, a charging parameter such as the energy supplied to the cell may be determined and used in order to obtain a balanced charging of the individual cells.

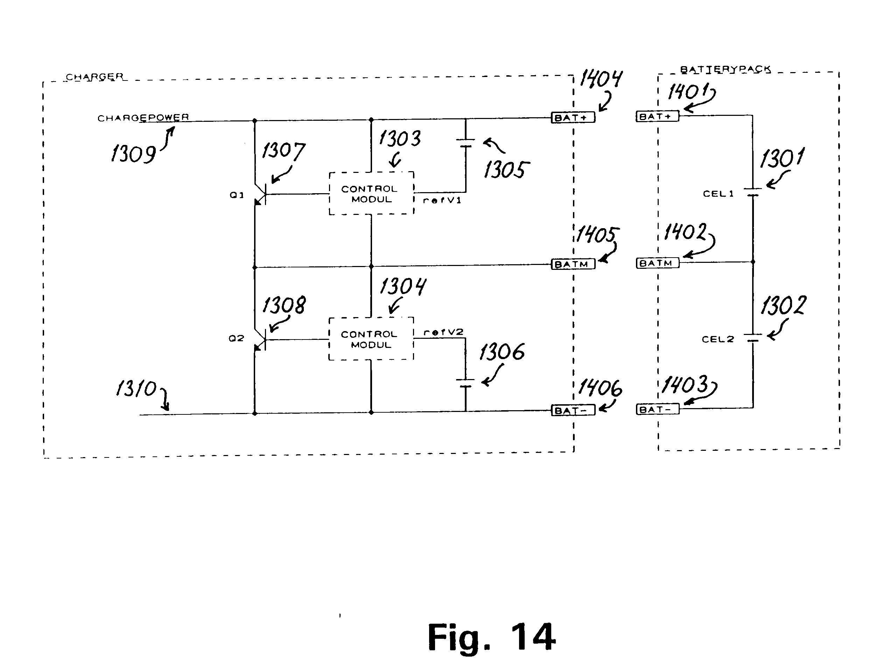

Fig. 14 shows the same charging system as shown in Fig. 13, but here the charging system is not included in the battery pack. Thus, the battery pack should have connections, 1401-1403, to each of the cells to be matched with connections, 1404-1406, of the charging system, so that the voltage can be measured for each individual cell during charging.

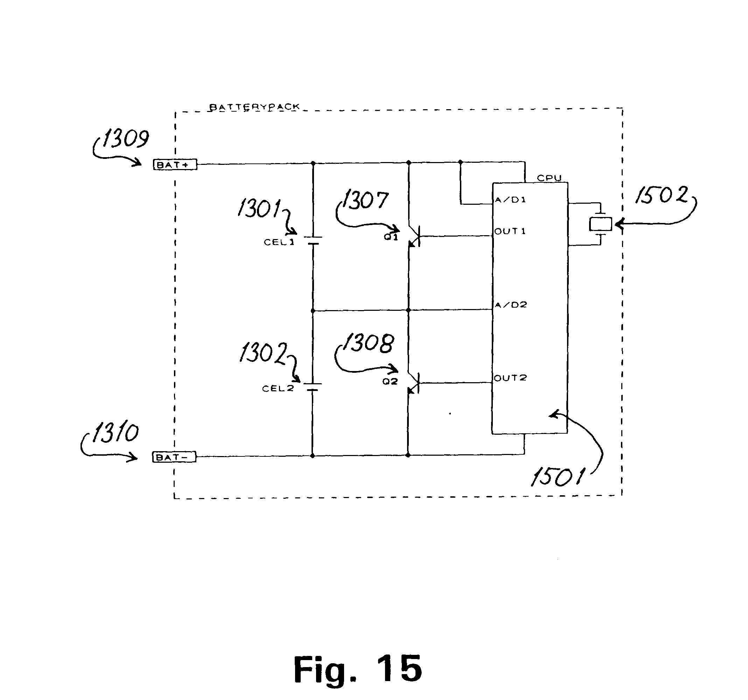

Fig. 15 shows a balanced charging system similar to that of Fig. 13. However, the control modules, 1303 and 1304, and the voltage reference devices, 1305 and 1306, are replaced by a microcontroller or a microprocessor, 1501, connected to an oscillator, 1502. In the system of Fig. 15, the predetermined reference voltage or voltages may be stored within the controller, and the voltage of each cell may be measured by use of analog to digital converters, such as A/D1 and A/D2, within the controller 1501.

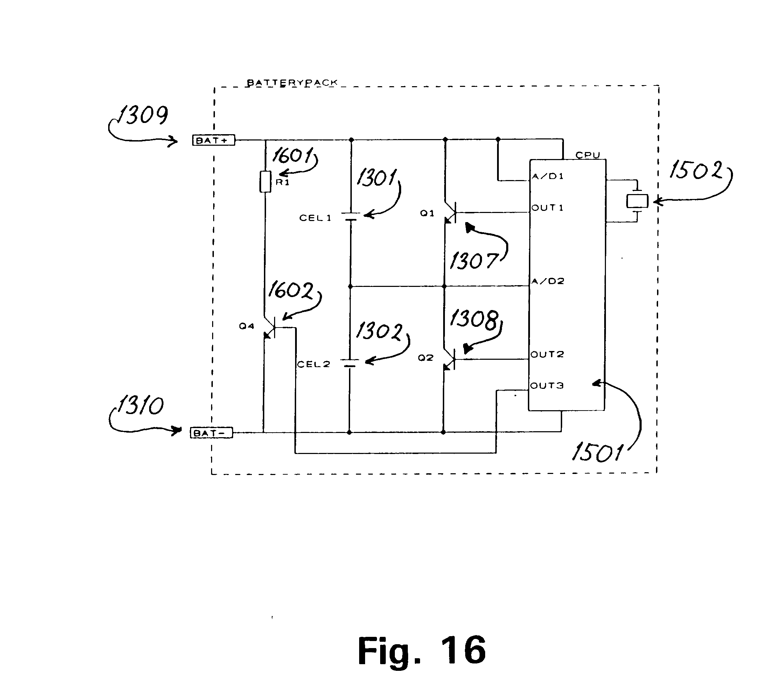

Fig. 16 shows a preferred embodiment of a balanced charging system similar to that of Fig. 15, but further including heat-dissipating components such as a resistor R1, 1601, corresponding to the components 104 described above in connection with Figs. 10-12. The current through the resistor R1, 1601, may be controlled by the microcontroller 1501 through a current-limiting device such as a transistor Q4, 1602. The current through the heating component or components 1601 should preferably be controlled in response to the output from a temperature sensor, which respond to the outer temperature of the cell or cells and inputs a temperature signal to the control device 1501. The controller 1501 may be preprogrammed to respond to the input from the temperature sensor so as to regulate the heat-generating current through the heating component or components in order to obtain a temperature within a predetermined temperature range. The outer cell temperature may be controlled both in a charging process and a discharging process. However, the predetermined temperature or temperature range may be different for the charging process and the discharging process.

When charging the cells within the battery pack, heat may be generated within the cell or cells corresponding to a spontaneous heating of the cell or cells and may thus cause an increase in the outer cell temperature. When one of the cells reaches the predetermined maximum cell voltage, the charging current is preferably decreased through this cell, and the spontaneous heating delivered from this cell will decrease. Thus, in a preferred charging process, the battery cell or cells is/are heated before the charging process and/or during the initial phase of the charging process by current supplied to the heating components such as a resistor R1, 1601, while the current supplied to the heating component or components is decreased as the heat generated within the cells and/or the charging circuitry during the charging process will be able to maintain the outer cell temperature within the desired temperature range; when the charging current supplied to the cell or cells is decreased during the end of the charging process, the current supplied to the heating component or components such as resistor R1, 1601, is preferably increased accordingly in order to maintain the outer cell temperature within the desired temperature range.

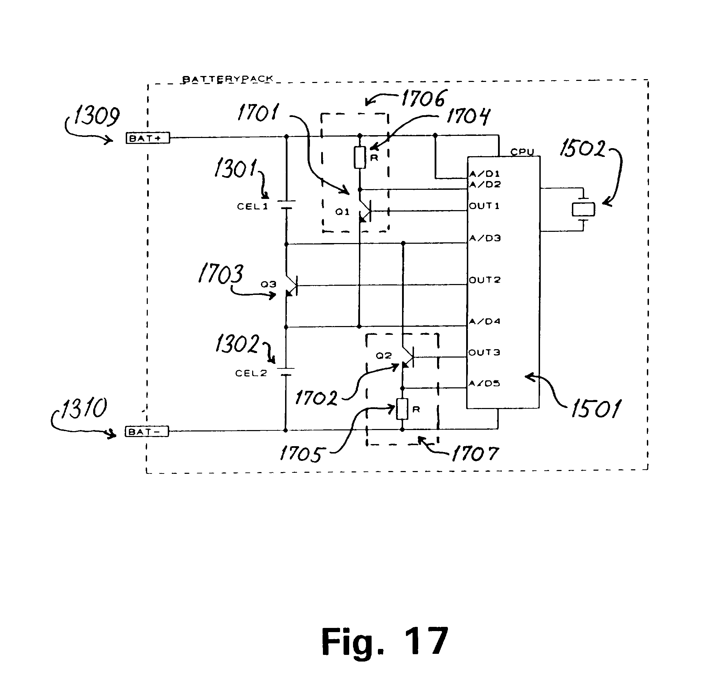

Yet another preferred embodiment of a balanced charging circuit or system is shown in Fig. 17. The charging system of Fig. 17 comprises a switch element 1703, which may be a transistor Q3, to interrupt the series connection between the cells 1301 and 1302 during charging. The switch element 1703 is controlled by the control circuit 1501, and the charging current supplied to the cell 1302 is regulated by a regulating circuitry 1706 which may comprise a resistor 1704 and a transistor Q1, 1701. The current may be controlled by measuring the voltage of resistor 1704 while at the same time measuring the voltage across the cell 1302; the voltages may be measured by using analog to digital converters forming part of the control circuit 1501. The current supplied to cell 1301 is controlled in the same way as the current to cell 1302 by use of a regulating circuitry 1707 which may comprise a resistor 1705 and transistor Q2, 1702. When the battery is operated in the discharging mode, the cells 1301 and 1302 are connected in series through the switch element 1703. When the cells are charged, the resistors 1704 and 1705 may be heated by the charging current and thereby dissipate heat to the battery pack.

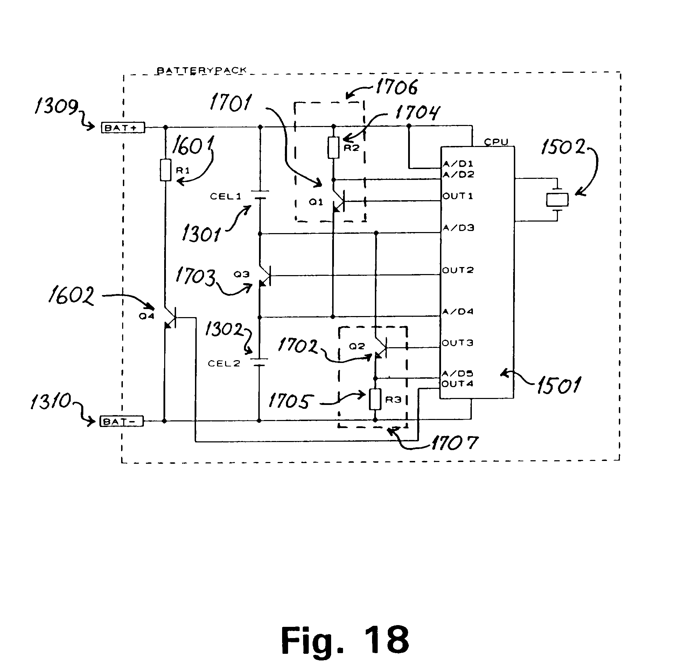

In Fig. 17 each cell is charged individually, and it is possible for the control circuit 1501 to charge a first cell while at the same time discharging a second cell which second cell may have reached a higher charging voltage than the first cell. Thus, when discharging the second cell, the cell voltage of the second cell may be brought to approx. the same level as the first cell. After discharging, the second cell may be charged further and the first cell may also be charged further; the discharged cell may generate internal heat during discharging and thus contribute to maintain a desired temperature range of the outer cell temperature; the discharged current from the second cell may also generate heat in a by-pass device or a current regulating circuitry, 1706 or 1707. Fig. 18 shows the same balanced charging system as shown in Fig. 17 but with the heating circuitry described above, which may comprise the components 1601 and 1602, being included in charging system.

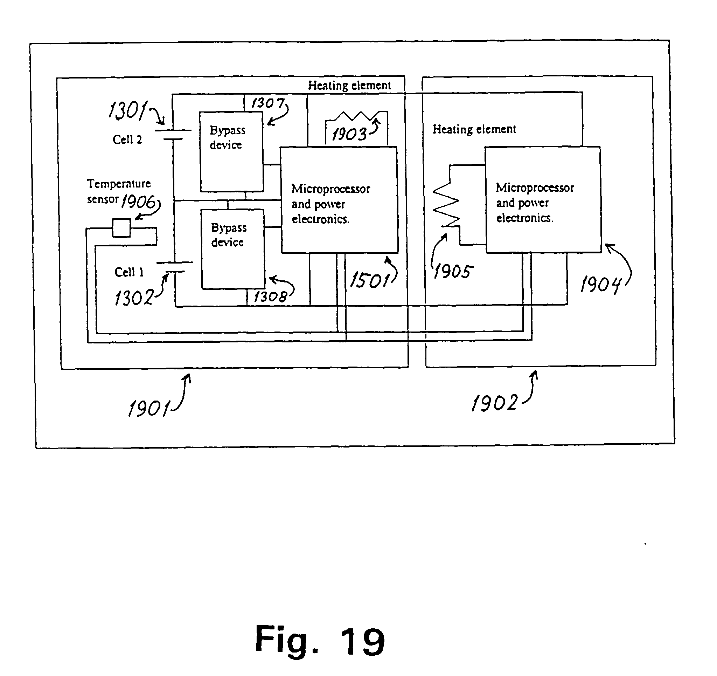

Fig. 19 also shows a preferred embodiment of a balanced charging system. The system of Fig. 19 is very much similar to those of Figs. 15 and 16, but in Fig. 19 it is illustrated how heating elements or components may be placed both within the battery pack and outside the battery pack. In Fig. 19 the charging system comprises a battery pack 1901 and an external package 1902 for supplying charging power and heat during the battery charging process. External package 1902 comprises power electronics and a microprocessor 1904 and a heating element 1905 which may be a heat-dissipating resistor.

During the charging process and/or prior to the charging process, the battery pack is heated by external heating element 1905. A temperature sensor 1906 is placed within battery pack 1901 and outputs a signal to processor 1904 in the external package. This signal is used by processor 1904 in order to control the power supplied to heating element 1905 and thereby the heat which is delivered to battery pack 1901. The heat delivered by heating element 1905 should be controlled so that the temperature of battery cells 1301 and 1302 within battery pack 1901 is kept within a predetermined temperature range during a major part of the charging process. The balanced charging process is controlled by processor 1501 as described previously in connection with Figs. 13 and 15. However, while charging battery cells 1301 and 1302, heat may also by delivered to the battery pack from internal heating element 1903 and from spontaneous heating of the cells thereby reducing the amount of heat generated energy needed from external heating element 1905.

When discharging the battery cells of Fig. 19 it may be desired to maintain the outer cell temperature of the cells within a predetermined temperature range. This desired cell temperature may be obtained by spontaneous heating of the cells during discharging, but it is preferred to speed up the temperature increasing process by drawing power from the battery cells and delivering this power to internal heating element 1903 during the discharging process. The amount of energy delivered by element 1903 is controlled by processor 1501 in response to input signals from temperature sensor 1906.

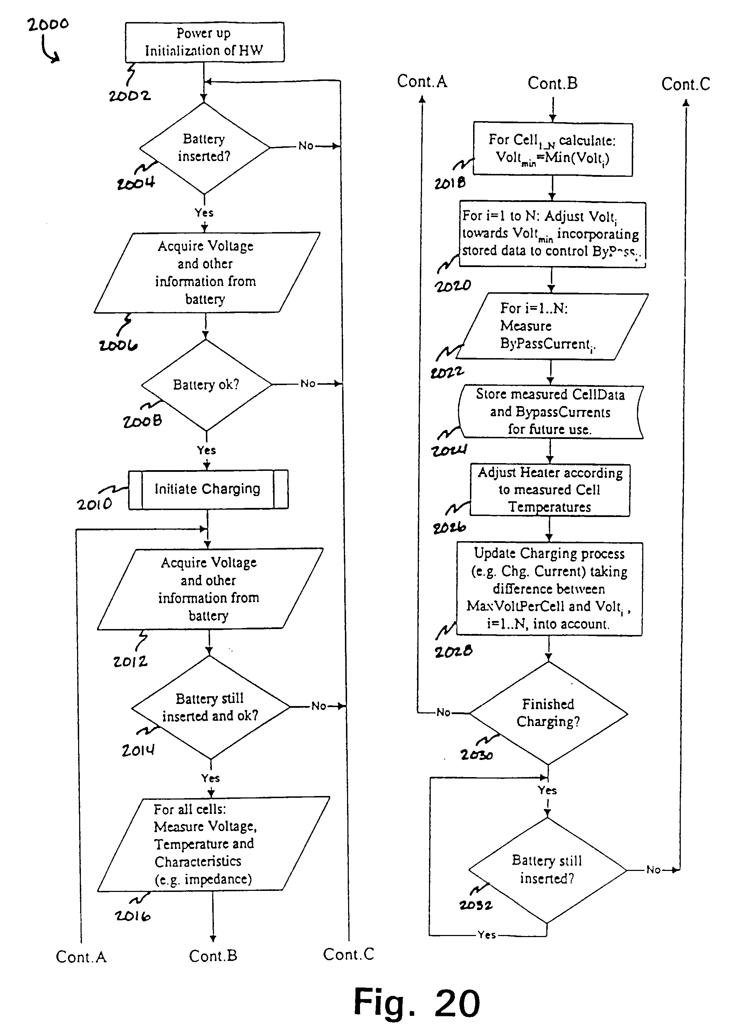

In general, microcontroller 1501 includes user programmable read only memory that contains a sequence of instructions that define the operation of the charging system. Referring to Fig. 20, when charging process 2000 is initiated, i.e. upon power up, after the hardware (e.g., counters and variables) are initialized (step 2002), a determination is made as to whether or not a proper battery has been inserted in the charger (step 2904). For example, the battery pack may include indicia of the type of battery to ensure that the battery pack is not inserted in an incompatible charger.

Where the battery pack includes a microprocessor, a code word is provided to the charger apparatus upon inquiry. Assuming that an appropriate battery is coupled to the charger, voltage and various other information (such as temperature) is acquired (step 2006) and tested against criteria corresponding to the particular type of battery to ensure that the battery is in a condition for charging. For example, if the battery is below a certain voltage level, it may be indicative of damaged cells, and unsuitable for charging. Likewise, if the battery temperature is outside of a predetermined broad range, it may be inappropriate to effect a charge in process.

Assuming that conditions were not indicated as unsuitable, charging is then initiated (step 2010). In general, the magnitude of the charging current is controlled according to measured parameters. Suitable charging current control is described in U.S. patent No. 5,619,118 and WO 94/05068.

Once the charging process has been initiated, the voltage and temperature of the respective cells are acquired and stored in memory (step 2012) and checked against the predetermined limits (step 2014). Assuming that operation is still within limits, the voltage of each cell is measured, while measuring the voltage across resistor 1704, and are again measured and stored in memory (step 2016). A balancing among the cells is then effected. The lowest cell voltage among the cells is then determined (step 2018). Bypass transistors (1701, 1702) are actuated for the cells with higher voltages to effectively equalize the charging (step 2020). Bypass current is then measured for each of the cells (step 2022) to build an archival record, and the bypass current, and other data stored in memory for future use (step 2024).

Appropriate adjustments are then made to the heater (step 2026). The temperature of the cells is compared against indicia of desired temperature, and a current path through the heating element actuated or deactuated accordingly.

The various interval timers and the like associated with the charging current level are then updated (step 2028) and tested against conditions indicative of completion of the charging process (step 2030). Assuming that the charging process has not completed, steps 2012 through 2030 are then repeated.

Once charging is completed, the charger enters into what is in effect a wake state until the battery is removed (step 2032).

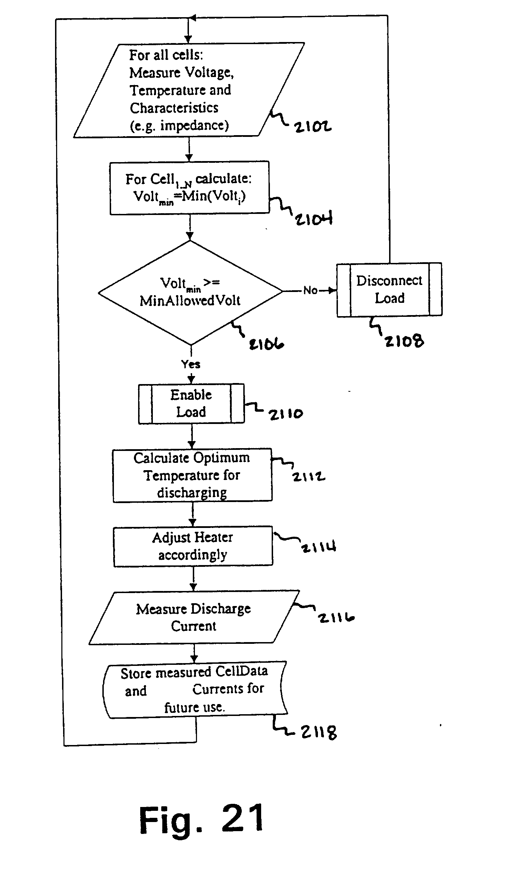

Referring to Fig. 21, microprocessor 1501 controls heating element 1903 and bypass devices 1307 and 1308 to maintain the temperature within a predetermined range, and ensure that overdischarge damage of the individual cells does not occur. Referring to Fig.21, when a discharge process is initiated, the voltage of the individual cells and temperature of the battery pack and any other relative characteristics are acquired, i.e., the respective A to D inputs of the microcontroller are read (step 2102).

The minimum voltage among the cells is then determined (step 2104), and the minimum voltage is then tested against a predetermined minimum threshold voltage (MinAllowedVolt) (step 2106). If the minimum cell voltage drops below the threshold value, the battery pack is effectively disconnected from the load (step 2108). Assuming that the minimum voltage is at least equal to the threshold value, the load is enabled (step 2110).

The optimum discharge temperature is then determined (step 2112) and the heater adjusted accordingly (step 2114). During the charging operation, an external source of power is available. During battery discharge, however, the battery itself is the sole source of power, and the amount of power diverted to maintaining temperature becomes a concern, and it is desirable to determine the optimum temperature range, i.e. minimum temperature for maximum capacity. Such determination tends to be both battery and installation specific, but in general, would be a formula based upon various constants pertaining to such things as the nature of the battery and application in which it is used, the discharge state of the battery, and ambient temperature. Once the optimum temperature is determined, power is provided to heater 1903 accordingly.

Discharge current is then measured (step 2116) and stored, together with other measured data for subsequent use (step 2118). The discharge sequence is then repeated.

It should be understood that the above-described examples of Figs. 13-19 refer to battery charging systems which, preferably, are used in order to obtain a fast charging process for battery cells, such as lithium cells, by applying a high cell temperature during charging, whereby a high charging current is allowed for a major part of the charging process resulting in a short overall period of charging or recharging. Preferably, the charging system of the present invention does not actuate any uncontrolled discharge of the battery cells while the battery is inserted in the power supplying unit.

It is further to be understood that during discharge of a battery cell in accordance with various aspects of the present invention, the cell is preferably heated by use of its own stored energy, since an external energy source may not be available. By using stored battery energy, when heating the battery cell or cells, it is made possible to use the battery at much lower ambient temperatures. For applications that draw high current pulses out of the battery (radio transmitters etc.), this solution might represent the only possibility for using the application at all at rather low temperatures.

As mentioned above, the predetermined temperature range may be different for the charging process and the discharging process, but preferably the minimum temperature of the battery cell should be determined so as to meet a set of cell parameters, such as internal impedance, useable capacity, lifetime, etc. If the outer temperature of a battery cell is below such a minimum temperature, the battery cells are heated to reach this minimum temperature preferably before any charging is initiated.

Further, by using a balanced charging process, each of the battery cells may be charged in an optimal way, whereby the useable cycle life of the battery is prolonged.

Although the above-described examples of Figs. 13-19 refer to battery charging system for charging batteries comprising 2 cells, the principles of these charging systems may be extended to charging systems for charging batteries with more than 2 cells such a 3, 4, 5, 6 or more cells. Also, from the particular embodiments of the invention described above, various modifications may be made without departing from the spirit and scope of the present invention.

It should be understood from the above discussion that the battery cell temperature is a parameter which can have a major effect on the charging and discharging characteristics of the battery cell. However, the effects of changes in the battery cell temperature varies for different types of batteries.

This is further described in the following which gives a discussion on rechargeable cells based on solid state insertion, so-called guest-host systems:

This discussion points out the difference between well known types of rechargeable battery cells, such as lead acid and "nickel-cadmium cells, and the newer insertion based types of cells, such as lithium ion cells.

The subject will be treated with attention to the effect of temperature on charge and discharge acceptance rates, as well as the effects of overcharge and overdischarge on net cell capacity.

For nickel-cadmium and lead acid cells ion transport takes place in an aqueous solution with a high ionic conductivity.

Insertion (swing) battery cells are quite new, innovative secondary rechargeable battery systems, of which the carbon/lithium cobaltite intercalation system is an example. The term "insertion" refers broadly to the introduction of a guest atom or molecule, ionized or neutral, into a host matrix. A redox process may be associated with the process. Thus, the redox process may take place, but it is not required to happen.

The carbon/lithium cobaltite cell has a host with a layered structure for negative and positive plates, and the lithium ion will intercalculate in both.

The lithium ion is transported between the plates (and through a separator) by an ion conductive substance, which may be liquid or solid. It is generally recognized that in most lithium cells, a Solid Electrolyte Interphase (SEI) is formed on the surface on the negative plate by reaction of lithium with the electrolyte. The lithium ion must pass this surface film.

The negative plate may be carbon (or a transition metal chalcogenide, halide, Bi, etc.). One example is graphite, a carbon allotrope that forms a layered structure with macromolecular sheets, consisting of hexagonal units of aromatic character, with good electron mobility.

Lithium ions intercalate in the vacant Van der Wall sites between layers, giving the stoichiometric relation LiC₆. In practice, the thin film graphite plate may consist of short range ordered domains, jumbled between each other. This, like the SEI film, may create bottlenecks with respect to lithium ion transport.

An other example of negative plate carbon is Coke, a general term meaning a less ordered or amorphous structure, usually made by thermal decomposition of an organic substance.

The positive plate may by a metal chalcogenide, halide, NiPS₃ or other. Lithium ion transport takes place in the lattice of the positive plate. Ion conduction varies according to material, structure and impurities.

Choice of electrolyte is generally limited to aprotic compounds, stable towards the electrodes. Due to these considerations, the electrolyte often has limited ionic conductivity.

In general, ion transport in systems like carbon/lithium cobaltite is temperature dependent, with conductivity/transport increasing with temperature. The limiting factor is the electrolyte;

The problems of the electrolyte is compounded at low temperatures. Temperature dependence of common electrolytes is adequately described by the Arrhenius relation down to about 12 °C. At lower temperatures, the deviation is profound.

Ionic conductance in solids is temperature dependent, with a general increase in conductance as temperature is raised from room temperature level. This is the case with both plates in lithium cobaltite.

This means that low temperature poses a special problem to lithium ion cells. Insulating and/or heating the cell(s) can make a useless cell useful (that is, the effect of heating in this temperature range can be qualitative rather than quantitative). Typical temperature range is 15-10 °C and downwards.

At higher temperatures, the relationship is linear, and insulating and/or heating the cell(s) can make it possible to charge the cell somewhat faster.

Nickel-cadmium and lead acid cells show prolonged charge time and/or reduced discharge rate at low temperatures, 0 °C and downwards, but the principal difference lies in the aqueous electrolyte with the established higher conduction rate of hydroxyl- and hydroxoniumion. In addition, salts typically have higher solubility in aqueous solution.

Overall, charge - and discharge acceptance rates are improved in lithium cobaltite swing cells as temperature is raised. Temperature rise is limited, at some point, by instability of the electrolyte.

The observed effect of over charge is irreversible loss of capacity, which in turn is thought to be due to structural changes in the positive plate. Balancing of cell voltage in a battery during charge ensures against loss of capacity. Balancing can be active (all cells are charged to full capacity), or passive (battery charge stops when the first cell reach its limit).

In summation, the differences in the physical conditions between established, commercial cells such as nickel-cadmium and lead acid, etc., and lithium ion cobaltite swing cells in terms of thermal behaviour is:

1. A substantially greater portion of ion conductance takes place in solids in a lithium ion cobaltite cell as compared to a nickel-cadmium or lead acid cell, which effects charge/discharge acceptance.

2. The electrolyte used in a lithium ion cobaltite cell is non-aqueous resulting in a lesser ion conductivity at a given temperature as compared to the aqueous electrolyte used in a nickel-cadmium or lead acid cell. Thus, the conductivity of a lithium ion cobaltite cell will have a less favourable temperature dependency than the conductivity of a nickel-cadmium or lead acid cell.

Thus, due to the differences in the physical conditions of lithium ion cells and well known types of cells such as nickel-cadmium or lead acid, the actual level of cell temperature during charging and/or discharging may have a much more fundamental effect on the operation of lithium ion cells than on the operation of nickel-cadmium or lead acid cells. Especially, when operating at low cell temperatures, for example below 10°C, below 0°C or below -5°C, a strong fall in the conductivity of lithium ion cells may be observed, which might lead to the result that the cell may not be used, since it will not be able to deliver a required discharging current at such temperatures.

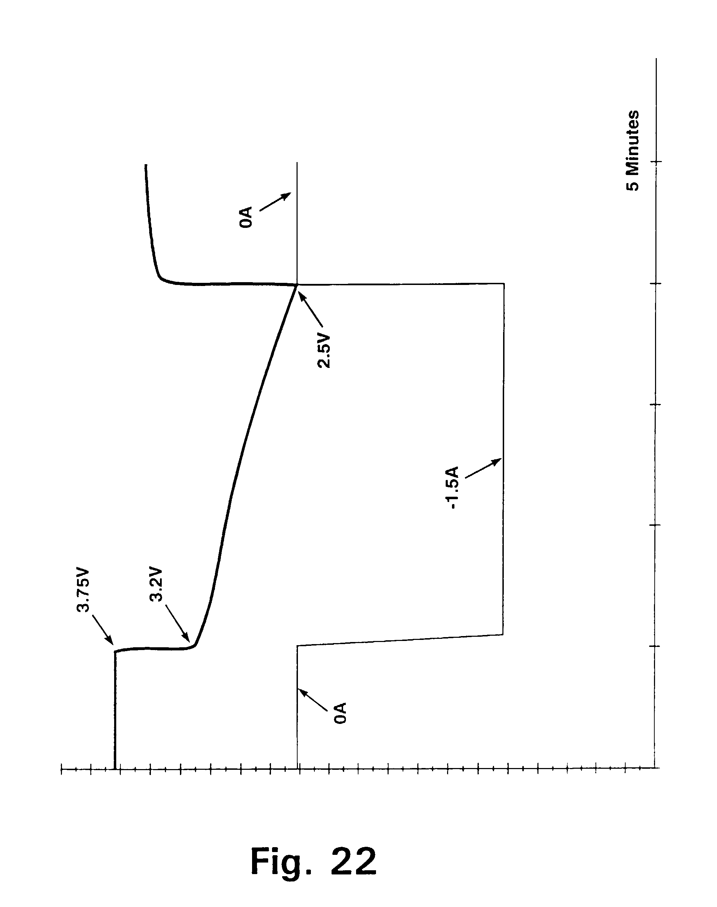

The above mentioned differences of the effect of cell temperature during discharging is illustrated in Figs. 22-24 for a lithium ion cell and a NiCd battery.

Fig. 22 shows the discharging curves for an insulated lithium ion cell with an ambient temperature of -3°C. The type of cell is a Sony ø18x65, Li-ion cell, and the cell is discharged for about 3 minutes with a discharging current of 1,5 mA. During the discharging period the cell voltage decreases from 3,2 Volts to 2,5 Volts, which is the minimum operating voltage specified by the battery supplier.

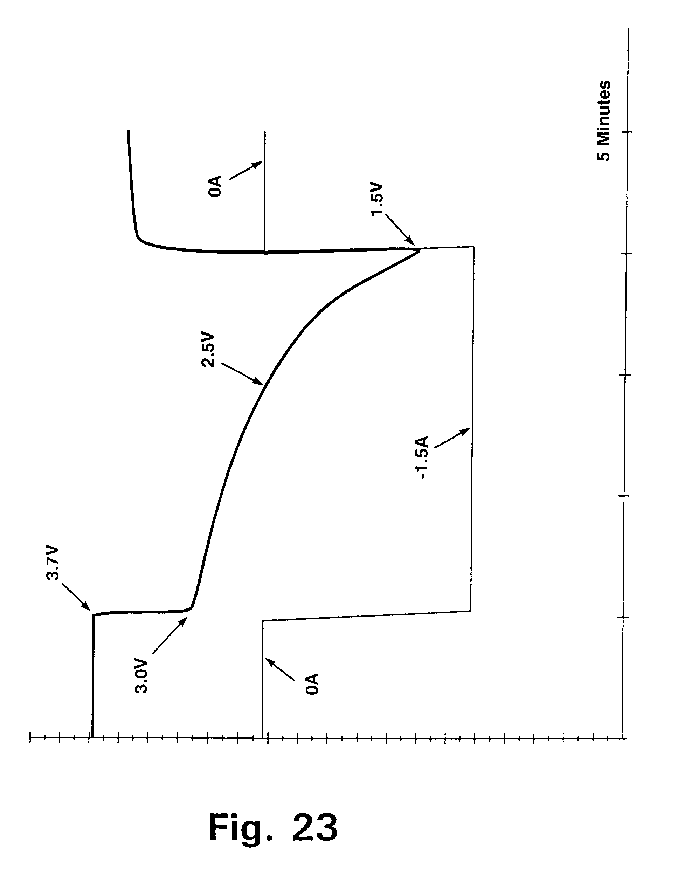

Fig. 23 shows the discharging curves for the same Sony cell as shown in Fig. 22, but without insulation. Again, the ambient temperature is around -3°C, and the cell is discharged for about 3 minutes with a discharging current of 1,5 mA. During the discharging period the cell voltage decreases from 3,0 Volts to 2,5 Volts within a time period of about 2 minutes; from this point in time, the cell voltage is reduced rather drastically and reaches 1,5 Volts at the end of the 3 minutes. Thus, this cell will only be operating at an ambient temperature of -3°C for about 2 minutes, whereas the insulated cell will be operating for about 3 minutes due to the self generated heating of the insulated cell.

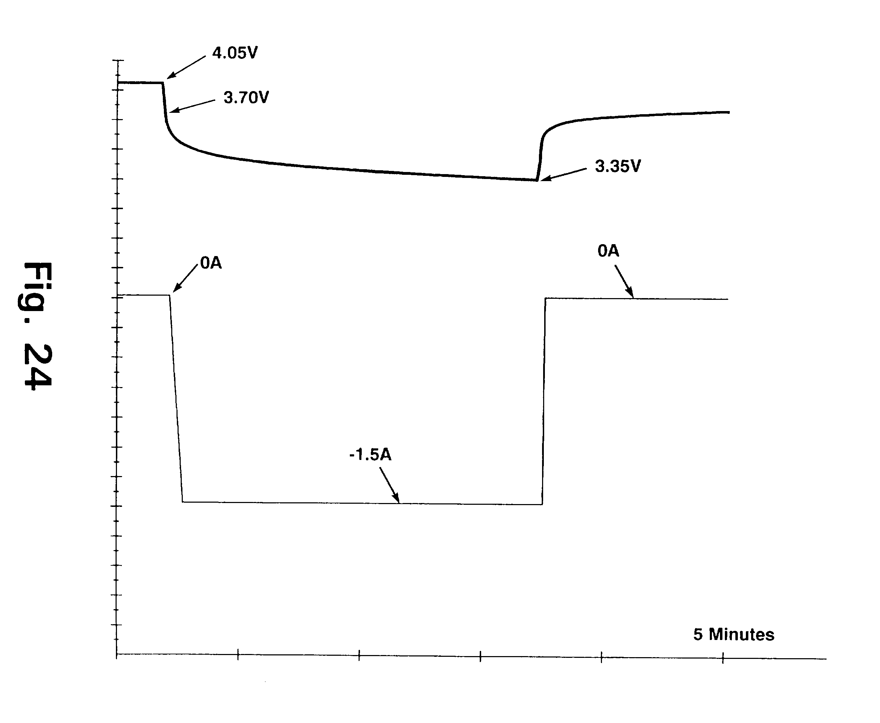

From the above discussion, it is to be expected that a NiCd battery should not show the same drastic reduction in operating time due to a low ambient temperature. This is illustrated in Fig. 24, which shows the discharging curves for a non-insulated NiCd battery with an ambient temperature of -3°C. Again, the cell is discharged for about 3 minutes with a discharging current of 1,5 mA. In order to compare the NiCd battery with the lithium ion cell of Fig. 23, the NiCd battery comprises 3 cells of the type Panasonic NiCd P70AAs, and, as can be seen from Fig. 24, the voltage drop which is dropped from 3,7 Volts to 3,35 Volts during the discharging period does not take the same drastic form as the voltage curve of Fig. 23.

Hence, the suggested methods and systems of the present invention provide solutions to the above mentioned problem by allowing the cell temperature of a lithium ion cell to be increased above the surrounding temperature value. This temperature increase may be provided in a controlled manner or may be provided by at least partly insulating the battery cell, as for example shown in the above described embodiments.

## Claims

1. A method of charging a rechargeable lithium battery (101) of a type that may be charged at a temperature within the temperature range 30°C-60°C, comprising the steps of
supplying energy to the battery (101) by supplying an electrical current to the battery (101) so as to charge the same,
arranging a layer of heat-insulating material (103) around the battery (101) at least partly surrounding the battery (101) thereby increasing the temperature of the battery (101) during at least part of the charging process by reducing loss of heat energy generated by spontaneous heating of the battery (101) during the charging process.

2. A method according to claim 1, further comprising the step of supplying heat generated energy to the battery (101) in addition to the energy supplied to the battery (101) by the charging current so as to maintain the outer temperature of the battery (101) within a predetermined range during a major part of the charging process.

3. A method according to claim 1 or 2, further comprising the step of supplying heat generated energy to the battery (101) so as to obtain an outer temperature of the battery (101) within a predetermined range during the initial phase of the charging process or prior to initiating the charging process.

4. A method according to claims 1-3, further comprising the step of arranging a layer of heat-conductive material (102) around the battery (101) at least partly surrounding the battery (101).

5. A method according to any of the preceding claims, wherein the predetermined range of the battery temperature is 30-60 °C, preferably of 40-50 °C, and more preferred in the range of 41-46 °C.

6. A method according to any of the preceding claims, wherein the battery (101) comprises at least two cells (101, 1301, 1302), the temperature of the battery (101) being controlled so that the outer temperature of each cell (101, 1301, 1302) is maintained mainly at the same value.

7. A method according to any of the preceding claims, wherein the battery (101) is packed in a battery pack (100), the outer temperature of the battery (101) being obtained by supplying heat-generated energy to the battery pack (101).

8. A method according to claim 7, wherein the step of supplying heat generated energy to the battery (101) comprises arranging an electric circuitry or component (104, 1601) within the battery pack (100), and supplying an electric current to the electric circuitry or component (104, 1601) for heating thereof.

9. A method according to claim 8, wherein the electric circuitry (104, 1601) comprises one or more resistors (104, 1601).

10. A method according to any of the preceding claims, wherein the battery (101) is a battery pack (100) ccmprising at least two battery cells (101, 1301, 1302), and wherein the step of supplying energy to the battery (101) comprises utilisation of a voltage-balanced charging process by which the voltage of each cell (101, 1301, 1302) reaches substantially the same maximum cell voltage.

11. A method according to claim 10, wherein the balanced charging process comprises the steps of
determining or measuring the voltage of each cell (101, 1301, 1302) at several points in time during charging,
comparing the cell voltages measured,
controlling the charging current of each cell (101, 1301, 1302) so as to maintain substantially the same voltage of each cell (101, 1301, 1302) during a major part of the charging process.

12. A method according to claim 10 or 11, further comprising discharging for a period of time a first cell (101, 1301, 1302) having a measured first cell voltage larger than a measured second cell voltage of a second cell (101, 1301, 1302) at a measurement point of time in order to lower the first cell voltage to substantially the same level as the second cell voltage.

13. A method according to any of the claims 10-12, further comprising controlling the balanced charging process by an electrically balanced charging circuitry (1303, 1304) with at least part of the balanced charging circuitry (1303, 1304) being arranged within the battery pack (100).

14. A method according to claim 13, further comprising heating by a current controlled by the balanced charging circuitry (1303, 1304) the part of the balanced charging circuitry (1303, 1304) arranged within the battery pack (100) during said charging and/or discharging process or processes.

15. A method according to claim 14, further comprising providing within the battery pack (100) a plurality of by-pass devices (1307, 1308), one for each cell (101, 1301, 1302), said by-pass devices (1307, 1308) being used for bypassing charging current around at least one cell (101, 1301, 1302) during said balanced charging process, said heating current comprising the by-passed charging current.

16. A method according to claim 15, further comprising supplying a discharging current to at least one of the by-pass devices (1307, 1308) when discharging one of the cells (101, 1301, 1302) during said charging process.

17. A method according to claim 15 or 16, further comprising delivering electric energy to heat the battery pack (100) through at least one electric component (104, 1601), in addition to one of the by-pass devices (1307, 1308), when the heat generated by internal heating of the cells (101, 1301, 1302) during charging and/or the by-passed current is insufficient to maintain a predetermined inner temperature of the battery pack (100).

18. A method of discharging a rechargeable lithium battery (101) of a type that may be charged at a temperature within the temperature range 30°C-60°C comprising the steps of
withdrawing electrical energy from the battery (101) for discharging the same, and
arranging a layer of heat-insulating material (103) around the battery (101) at least partly surrounding the battery (101) thereby increasing the temperature of the battery (101) during at least part of the discharging process by reducing loss of heat energy generated by spontaneous heating of the battery (101) during the discharging process.

19. A method according to claim 18, wherein the battery (101) is packed in a battery pack (100) and further comprising the step of feeding current from the battery (101) to an electric circuitry or component (104, 1601) being arranged within the battery pack (100), said circuitry or component (104, 1601) being heated by the supplied current thereby increasing the outer temperature of the battery (101) during at least part of the discharging process.

20. A method according to any of the claims 18-19, wherein the battery (101) is packed in a battery pack (100) and further comprising the step of feeding current before initiation of the discharging process, from an external current source to an electric circuitry or component (104, 1601) being arranged within the battery pack (100), said circuitry or component (104, 1601) being heated by the supplied current thereby increasing the outer temperature of the battery (101).

21. A battery system comprising a battery pack (100) with one or more battery cells (101, 1301, 1302) forming a rechargeable lithium battery, at least one of the battery cells (101, 1301, 1302) being of a type that may be charged at a temperature within the temperature range 30°C-60°C, said battery pack (100) comprising a layer of a heat-insulating material (103) at least partly surrounding the one or more battery cells (101, 1301, 1302), said layer of heat-insulating material (103) maintaining within the battery pack (100) at least part of the energy generated by spontaneous heating or internal heating of the one or more battery cells (101, 1301, 1302) during discharging or charging.

22. A battery system according to claim 21, further comprising a heat-conductive material (102) arranged between the battery cells (101, 1301, 1302) and the heat-insulating layer (103) and at least partly surrounding the battery cell or cells (101, 1301, 1302).

23. A battery system according to claim 21 or 22, further comprising an electric circuitry or component (104, 1601) adapted to supply energy in the form of current generated heat to the battery pack (100) so as to increase the outer temperature of the battery cell or cells (101, 1301, 1302) when said energy is supplied.

24. A battery system according to claim 23, wherein the electric circuitry (104, 1601) comprises at least part of a battery charging system arranged within the battery pack (100), said part of the charging system comprising one or more by-pass devices (1307, 1308) being adapted to by-pass charging current supplied by the charging system to at least one battery cell (101, 1301, 1302) during a charging process.

25. A battery system according to claim 24, wherein the electric circuitry (104, 1601) further comprises at least one electric component (104, 1601) in addition to said by-pass devices (1307, 1308), said component (104, 1601) being arranged within the battery pack (100) and being adapted to deliver current generated heat to the battery pack (100) when the heat generated by the by-pass devices (1307, 1308) and/or by spontaneous heating is insufficient to maintain the outer temperature of the battery (101) within a predetermined temperature range.

26. A battery system according to claim 24 or 25, wherein the battery charging system is adapted to by-pass the charging current around one of the battery cells (101, 1301, 1302) when a voltage measured across said one battery cell (101, 1301, 1302) is equal to or larger than a pre-selected maximum cell voltage.

## Patentansprüche

1. Verfahren zum Aufladen einer wiederaufladbaren Lithium-Batterie (101) eines Typs, der bei einer Temperatur innerhalb des Temperaturbereichs von 30°C-60°C aufgeladen werden kann, mit folgenden Schritten
Zuführen von Energie an die Batterie (101) durch Zuführen eines elektrischen Stroms an die Batterie (101), so daß diese geladen wird,
Anordnen einer Schicht eines wärmeisolierenden Materials (103) um die Batterie (101) herum derart, daß wenigstens ein Teil der Batterie (101) eingefaßt wird, wodurch die Temperatur der Batterie (101) während wenigstens eines Teils des Aufladeprozesses durch die Verringerung des Verlustes der Wärmeenergie erhöht wird, die durch spontanes Erhitzen der Batterie (101) während des Aufladeprozesses entsteht.

2. Verfahren nach Anspruch 1, das ferner den Schritt des Zuführens von durch Wärme erzeugter Energie an die Batterie (101) zusätzlich zu der Energie aufweist, die der Batterie (101) aufgrund des Aufladestroms zugeführt wird, um die Außentemperatur der Batterie (101) innerhalb eines vorbestimmten Bereichs während eines Hauptteils des Aufladeprozesses zu halten.

3. Verfahren nach Anspruch 1 oder 2, das ferner den Schritt des Zuführens von durch Wärme erzeugter Energie an die Batterie (101) aufweist, so daß eine Außentemperatur der Batterie (101) innerhalb eines vorbestimmten Bereichs während der Anfangsphase des Aufladeprozesses oder vor Beginn des Aufladeprozesses erhalten wird.

4. Verfahren nach einem der Ansprüche 1-3, das ferner den Schritt des Anordnens einer Schicht eines wärmeleitfähigen Materials (102) um die Batterie (101) herum aufweist, das die Batterie (101) wenigstens teilweise umfaßt.

5. Verfahren nach einem der vorherigen Ansprüche, wobei der vorbestimmte Bereich der Batterietemperatur 30-60°C, vorzugsweise 45-50°C und besonders bevorzugt 41-46°C ist.

6. Verfahren nach einem der vorherigen Ansprüche, wobei die Batterie (101) wenigstens zwei Zellen (101, 1301, 1302) aufweist, und die Temperatur der Batterie (101) derart gesteuert wird, daß die Außentemperatur einer jeden Zelle (101, 1301, 1302) im wesentlichen auf dem gleichen Wert gehalten wird.

7. Verfahren nach einem der vorherigen Ansprüche, wobei die Batterie (101) in einem Batteriepack (100) zusammengefaßt ist und die Außentemperatur der Batterie (101) erhalten wird, indem durch Wärme erzeugte Energie dem Batteriepack (101) zugeführt wird.

8. Verfahren nach Anspruch 7, wobei der Schritt des Zuführens von durch Wärme erzeugter Energie an die Batterie (101) das Anordnen eines elektrischen Schaltkreises oder eines elektrischen Bauteils (104, 1601) in dem Batteriepack (100) und Zuführen eines elektrischen Stroms an den elektrischen Schaltkreis oder das elektrische Bauteil (104, 1601) zum Heizen desselben aufweist.

9. Verfahren nach Anspruch 8, wobei der elektrische Schaltkreis (104, 1601) einen oder mehrere Widerstände (104, 1601) aufweist.

10. Verfahren nach einem der vorherigen Ansprüche, wobei die Batterie (101) ein Batteriepack (100) ist, das wenigstens zwei Batteriezellen (101, 1301, 1302) aufweist, und der Schritt des Zuführens von Energie an die Batterie (101) die Verwendung eines spannungsausgeglichenen Aufladeprozesses aufweist, mit dem die Spannung einer jeden Zelle (101, 1301, 1302) im wesentlichen die gleiche maximale Zellspannung erreicht.

11. Verfahren nach Anspruch 10, wobei der ausgeglichene Aufladeprozeß folgende Schritte aufweist:
Erfassen oder Messen der Spannung einer jeden Zelle (101, 1301, 1302) zu verschiedenen Zeitpunkten während des Aufladens,
Vergleichen der gemessenen Zellspannungen,
Steuern des Aufladestroms einer jeden Zelle (101, 1301, 1302) derart, daß im wesentlichen die gleiche Spannung einer jeden Zelle (101, 1301, 1302) während eines Hauptteils des Aufladeprozesses aufrechterhalten wird.

12. Verfahren nach Anspruch 10 oder 11, das ferner ein Entladen einer ersten Zelle (101, 1301, 1302) für eine bestimmte Zeitdauer aufweist, wenn eine erste Zellspannung gemessen wurde, die größer als eine an einem Zeitmeßpunkt gemessene zweite Zellspannung einer zweiten Zelle (101, 1301, 1302) ist, um die erste Zellspannung auf im wesentlichen den gleichen Wert, wie die zweite Zellspannung, zu erniedrigen.

13. Verfahren nach einem der Ansprüche 10-12, das ferner ein Steuern des ausgeglichenen Aufladeprozesses mittels eines elektrisch ausgeglichenen Aufladeschaltkreises (1303, 1304) aufweist, wobei wenigstens ein Teil des ausgeglichenen Aufladeschaltkreises (1303, 1304) in dem Batteriepack (100) angeordnet ist.

14. Verfahren nach Anspruch 13, das ferner während des Aufladeprozesses und/oder des Entladeprozesses ein Erhitzen des in den Batteriepack (100) angeordneten Teils des ausgeglichenen Aufladeschaltkreises (1303, 1304) durch einen von dem ausgeglichenen Aufladeschaltkreis (1303, 1304) gesteuerten Strom afweist.

15. Verfahren nach Anspruch 14, das ferner ein Bereitstellen einer Mehrzahl von Bypass-Vorrichtungen (1307, 1308) in dem Batteriepack (100) aufweist, wobei je eine Bypass-Vorrichtung (1307, 1308) für jeweils eine Zelle (101, 1301, 1302) vorgesehen ist und die Bypass-Vorrichtungen (1307, 1308) für Bypässe des Aufladestroms um wenigstens eine Zelle (101, 1301, 1302) herum während des ausgeglichenen Aufladeprozesses verwendet wird, wobei der Heizstrom aufgrund des Bypasses den Ladestrom aufweist.

16. Verfahren nach Anspruch 15, das ferner ein Zuführen eines Entladestroms an wenigstens eine der Bypass-Vorrichtungen (1307, 1308) aufweist, wenn eine der Zellen (101, 1301, 1302) während des Aufladeprozesses entladen wird.

17. Verfahren nach Anspruch 15 oder 16, das ferner ein Zuführen von elektrischer Energie zum Aufheizen des Batteriepacks (100) durch wenigstens ein elektrisches Bauteil (104, 1601) zusätzlich zu einer der Bypass-Vorrichtungen (1307, 1308) aufweist, wenn durch das innere Erwärmen der Zellen (101, 1301, 1302) erzeugte Wärme während des Aufladens und/oder der Strom aufgrund des Bypasses unzureichend ist, um eine vorbestimmte Innentemperatur des Batteripacks (100) aufrechtzuerhalten.

18. Verfahren zum Entladen einer wiederaufladbaren Lithium-Batterie (101) eines Typs, der bei einer Temperatur innerhalb des Temperaturbereichs von 30°C-60°C aufgeladen werden kann, mit folgenden Schritten:
Entziehen von elektrischer Energie von der Batterie (101) zum Entladen derselben, und
Anordnen einer Lage eines wärmeisolierenden Materials (103) um die Batterie (101) herum, so daß die Lage wenigstens teilweise die Batterie (101) umfaßt, wodurch die Temperatur der Batterie (101) während wenigstens eines Teils des Entladeprozesses durch eine Verringerung des Verlustes der Wärmeenergie erhöht wird, die durch Erhitzen spontanes der Batterie (101) während des Entladeprozesses entsteht.

19. Verfahren nach Anspruch 18, wobei die Batterie (101) in einem Batteriepack (100) zusammengefaßt ist, und das ferner den Schritt des Zuführens eines Stroms von der Batterie (101) zu einem elektrischen Schaltkreis oder einem elektrischen Bauteil (104, 1601) aufweist, der/das in der Batterie (101) angeordnet ist, wobei der Schaltkreis oder das Bauteil (104, 1601) von dem zugeführten Strom erwärmt wird, wodurch die Außentemperatur der Batterie (101) während wenigstens eines Teils des Entladeprozesses erhöht wird.

20. Verfahren nach einem der Ansprüche 18-19, wobei die Batterie (101) in einem Batteriepack (100) zusammengefaßt ist, und das ferner den Schritt des Zuführen eines Stroms vor dem Beginn des Entladeprozesses von einer externen Stromquelle zu einem elektrischen Schaltkreis oder einem elektrischen Bauteil (104, 1601) aufweist, der/das in dem Batteriepack (100) angeordnet ist, wobei der Schaltkreis oder das Bauteil (104, 1601) von dem zugeführten Strom erwärmt wird, wobei die Außentemperatur der Batterie (101) erhöht wird.

21. Batteriesystem mit einem Batteriepack (100) mit einer oder mehreren Batteriezellen (101, 1301, 1302), die eine wiederaufladbare Lithium-Batterie bilden, wobei wenigstens eine der Batteriezellen (101, 1301, 1302) von einem Typ ist, der bei einer Temperatur innerhalb des Temperaturbereichs von 30°C-60°C geladen werden kann, wobei das Batteriepack (100) eine Schicht eines wärmeisolierenden Materials (103) aufweist, das eine oder mehrere Batteriezellen (101, 1301, 1302) wenigstens teilweise umfaßt, wobei die Schicht aus einem wärmeisolierenden Material (103) wenigstens einen Teil der durch das spontanes Erhitzen oder innere Erwärmung der einen oder mehreren Batteriezellen (101, 1301, 1302) erzeugten Energie während des Entladens oder Aufladens aufrechterhält.

22. Batteriesystem nach Anspruch 21, das ferner ein wärmeleitfähiges Material (102) aufweist, das zwischen den Batteriezellen (101, 1301, 1302) und der wärmeisolierenden Schicht (103) angeordnet ist und wenigstens teilweise die Batteriezelle oder Batteriezellen (101, 1301, 1302) umfaßt.

23. Batteriesystem nach Anspruch 21 oder 22, das ferner einen elektrischen Schaltkreis oder ein elektrisches Bauteil (104, 1601) aufweist, der/das geeignet ist, Energie in Form von mit Strom erzeugter Wärme an das Batteriepack (100) zu liefern, um die Außentemperatur der Batteriezelle oder der Batteriezellen (101, 1301, 1302) zu erhöhen, wenn die Energie zugeführt wird.

24. Batteriesystem nach Anspruch 23, wobei der elektrische Schaltkreis (104, 1601) wenigstens einen Teil eines Batterieaufladesystems aufweist, das in dem Batteriepack (100) angeordnet ist, wobei der Teil des Aufladesystems eine oder mehrere Bypass-Vorrichtungen (1307, 1308) aufweist, die geeignet sind, einen Bypass für den Aufladestrom bereitzustellen, der von dem Aufladesystem an wenigstens eine Batteriezelle (101, 1301, 1302) während eines Aufladeprozesses zugeführt wird.

25. Batteriesystem nach Anspruch 24, wobei der elektrische Schaltkreis (104, 1601) ferner wenigstens ein elektrisches Bauteil (104, 1601) zusätzlich zu den Bypass-Vorrichtungen (1307, 1308) aufweist, wobei das Bauteil (104, 1601) in dem Batteriepack (100) angeordnet ist und geeignet ist, mit Strom erzeugte Wärme an das Batteriepack (100) zu liefern, wenn die von den Bypass-Vorrichtungen (1307, 1308) und/oder durch spontanes Erhitzen erzeugte Energie unzureichend ist, um die Außentemperatur der Batterie (101) in einem vorbestimmten Temperaturbereich zu halten.

26. Batteriesystem nach Anspruch 24 oder 25, wobei das Batterieaufladesystem geeignet ist, einen Bypass für den Aufladestrom um eine der Batteriezellen (101, 1301, 1302) herum bereitzustellen, wenn eine über eine der Batteriezellen (101, 1301, 1302) gemessene Spannung gleich oder größer als eine vorgewählte maximale Zellspannung ist.

## Revendications

1. Processus de charge d'une batterie au lithium rechargeable (101) d'un type qui peut être chargé à une température comprise dans la plage de température de 30 C - 60 °C, comprenant les étapes consistant à :
délivrer de l'énergie à la batterie (101) en délivrant un courant électrique à la *batterie* (101) de manière à charger celle-ci,
agencer une couche d'isolant thermique (103) autour de la batterie (101), entourant au moins partiellement la batterie (101), augmentant de ce fait la température de la batterie (101) pendant au moins une partie du processus de charge en réduisant la perte de l'énergie thermique générée par le chauffage spontané de la batterie (101) pendant le processus de charge.

2. Processus selon la revendication 1, comprenant, de plus, l'étape consistant à délivrer l'énergie générée sous forme de chaleur à la batterie (101) en plus de l'énergie délivrée à la batterie (101) par le courant de charge de manière à maintenir la température externe de la batterie (101) dans une plage prédéterminée pendant une majeure partie du processus de charge.

3. Processus selon la revendication 1 ou 2, comprenant, de plus, l'étape consistant à délivrer l'énergie générée sous forme de chaleur à la batterie (101) de manière à obtenir une température externe de la batterie (101) comprise dans une plage prédéterminée pendant la phase initiale du processus de charge ou avant de lancer le processus de charge.

4. Processus selon les revendications 1-3, comprenant, de plus, l'étape consistant à agencer une couche de matériau conducteur de chaleur (102) autour de la batterie (101), entourant au moins partiellement la batterie (101).

5. Processus selon l'une quelconque des revendications précédentes, dans lequel la plage prédéterminée de température de la batterie est de 30-60 °C, de préférence de 40-50 °C, et plus préférablement dans la plage de 41-46 °C.

6. Processus selon l'une quelconque des revendications précédentes, dans lequel la batterie (101) comprend au moins deux cellules (101, 1301, 1302), la température de la batterie (101) étant contrôlée de sorte que la température externe de chaque cellule (101, 1301, 1302) soit maintenue principalement à la même valeur.

7. Processus selon l'une quelconque des revendications précédentes, dans lequel la batterie (101) est placée dans un ensemble de batteries (100), la température externe de la batterie (101) étant obtenue en délivrant l'énergie générée sous forme de chaleur à l'ensemble de batteries (101).

8. Processus selon la revendication 7, dans lequel l'étape consistant à délivrer l'énergie générée sous forme de chaleur à la batterie (101) comprend l'agencement d'un composant ou d'éléments de circuit électrique (104, 1601) à l'intérieur de l'ensemble de batteries (100), et la fourniture d'un courant électrique au composant ou aux éléments de circuit électrique (104, 1601) pour les chauffer.

9. Processus selon la revendication 8, dans lequel les éléments de circuit électrique (104, 1601) comprennent une ou plusieurs résistances (104, 1601).

10. Processus selon l'une quelconque des revendications précédentes, dans lequel la batterie (101) est un ensemble de batteries (100) comprenant au moins deux cellules de batterie (101, 1301, 1302), et dans lequel l'étape consistant à délivrer de l'énergie à la batterie (101) comprend l'utilisation d'un processus de charge équilibrée en tension par lequel la tension de chaque cellule (101, 1301, 1302) atteint sensiblement la même tension de cellule maximale.

11. Processus selon la revendication 10, dans lequel le processus de charge équilibrée comprend les étapes consistant à :
déterminer ou mesurer la tension de chaque cellule (101, 1301, 1302) à plusieurs instants pendant la charge,
comparer les tensions de cellule mesurées,
contrôler le courant de charge de chaque cellule (101, 1301, 1302) de manière à maintenir sensiblement la même tension pour chaque cellule (101, 1301, 1302) pendant une majeure partie du processus de charge.

12. Processus selon la revendication 10 ou 11, comprenant, de plus, la décharge, pendant un certain intervalle de temps, d'une première cellule (101, 1301, 1302) ayant une première tension de cellule mesurée supérieure à une seconde tension de cellule mesurée d'une seconde cellule (101, 1301, 1302) à un instant de mesure afin d'abaisser la première tension de cellule sensiblement au même niveau que la seconde tension de cellule.

13. Processus selon l'une quelconque des revendications 10-12, comprenant, de plus, le contrôle du processus de charge équilibrée par des éléments de circuit de charge électriquement équilibrée (1303, 1304), au moins une partie des éléments de circuit de charge équilibrée (1303, 1304) étant agencée à l'intérieur de l'ensemble de batteries (100).

14. Processus selon la revendication 13, comprenant, de plus, le chauffage, par un courant contrôlé par les éléments de circuit de charge équilibrée (1303, 1304), de la partie des éléments de circuit de charge équilibrée (1303, 1304) agencée à l'intérieur de l'ensemble de batteries (100) pendant ledit ou lesdits processus de charge et/ou de décharge.

15. Processus selon la revendication 14, comprenant, de plus, la prévision, à l'intérieur de l'ensemble de batteries (100), d'une pluralité de dispositifs de dérivation (1307, 1308), un pour chaque cellule (101, 1301, 1302), lesdits dispositifs de dérivation (1307, 1308) étant utilisés pour dériver le courant de charge d'au moins une cellule (101, 1301, 1302) pendant ledit processus de charge équilibrée, ledit courant de chauffage comprenant le courant de charge dérivé.

16. Processus selon la revendication 15, comprenant, de plus, la fourniture d'un courant de décharge à au moins l'un des dispositifs de dérivation (1307, 1308) lors de la décharge d'une des cellules (101, 1301, 1302) pendant ledit processus de charge.

17. Processus selon la revendication 15 ou 16, comprenant, de plus, la fourniture d'énergie électrique pour chauffer l'ensemble de batteries (100) par l'intermédiaire d'au moins un composant électrique (104, 1601), en plus d'un des dispositifs de dérivation (1307, 1308), lorsque la chaleur générée par le chauffage interne des cellules (101, 1301, 1302) pendant la charge et/ou par le courant dérivé est insuffisante pour maintenir une température interne prédéterminée de l'ensemble de batteries (100).

18. Processus de décharge d'une batterie au lithium rechargeable (101) d'un type qui peut être chargé à une température comprise dans la plage de température de 30°C - 60 °C, comprenant les étapes consistant à ;
retirer l'énergie électrique de la batterie (101) pour la décharger, et
agencer une couche d'isolant thermique (103) autour de la batterie (101), entourant au moins partiellement la batterie (101), augmentant de ce fait la température de la batterie (101) pendant au moins une partie du processus de décharge en réduisant la perte de l'énergie thermique générée par le chauffage spontané de la batterie (101) pendant le processus de décharge.

19. Processus selon la revendication 18, dans lequel la batterie (101) est placée dans un ensemble de batteries (100) et comprenant, de plus, l'étape consistant à alimenter en courant, à partir de la batterie (101), un composant ou des éléments de circuit électrique (104, 1601) agencés à l'intérieur de l'ensemble de batteries (100), ledit composant ou lesdits éléments de circuit (104, 1601) étant chauffés par le courant délivré, augmentant de ce fait la température externe de la batterie (101) pendant au moins une partie du processus de décharge.

20. Processus selon l'une quelconque des revendications 18-19, dans lequel la batterie (101) est placée dans un ensemble de batteries (100), et comprenant, de plus, l'étape consistant à alimenter en courant, avant le lancement du processus de décharge, à partir d'une source de courant externe, un composant ou des éléments de circuit électrique (104, 1601) agencés à l'intérieur de l'ensemble de batteries (100), ledit composant ou lesdits éléments de circuit (104, 1601) étant chauffés par le courant délivré, augmentant de ce fait la température externe de la batterie (101).

21. Système de batteries comprenant un ensemble de batteries (100) avec une ou plusieurs cellules de batterie (101, 1301, 1302) formant une batterie au lithium rechargeable, au moins l'une des cellules de batterie (101, 1301, 1302) étant d'un type qui peut être chargé à une température comprise dans la plage de température de 30 °C - 60 °C, ledit ensemble de batteries (100) comprenant une couche d'un isolant thermique (103) entourant au moins partiellement ladite cellule ou plusieurs des cellules de batterie (101, 1301, 1302), ladite couche d'isolant thermique (103) maintenant à l'intérieur de l'ensemble de batteries (100) au moins une partie de l'énergie générée par le chauffage spontané ou par le chauffage interne de ladite cellule ou de plusieurs des cellules de batterie (101, 1301, 1302) pendant la décharge ou la charge.

22. Système de batteries selon la revendication 21, comprenant, de plus, un matériau conducteur de chaleur (102) agencé entre les cellules de batterie (101, 1301, 1302) et la couche d'isolation thermique (103) et entourant au moins partiellement la cellule ou les cellules de batterie (101, 1301, 1302).

23. Système de batteries selon la revendication 21 ou 22, comprenant, de plus, un composant ou des éléments de circuit électrique (104, 1601) adaptés pour délivrer de l'énergie sous la forme de chaleur générée par le courant à l'ensemble de batteries (100) de manière à augmenter la température externe de la cellule ou des cellules de batterie (101, 1301, 1302) lorsque ladite énergie est délivrée.

24. Système de batteries selon la revendication 23, dans lequel les éléments de circuit électrique (104, 1601) comprennent au moins une partie d'un système de charge de batterie agencé à l'intérieur de l'ensemble de batteries (100), ladite partie du système de charge comprenant un ou plusieurs dispositifs de dérivation (1307, 1308) qui sont adaptés pour dériver le courant de charge délivré par le système de charge à au moins une cellule de batterie (101, 1301, 1302) pendant un processus de charge.

25. Système de batteries selon la revendication 24, dans lequel les éléments de circuit électrique (104, 1601) comprennent, de plus, au moins un composant électrique (104, 1601) en plus desdits dispositifs de dérivation (1307, 1308), ledit composant (104, 1601) étant agencé à l'intérieur de l'ensemble de batteries (100) et étant adapté pour délivrer la chaleur générée par le courant à l'ensemble de batteries (100) lorsque la chaleur générée par les dispositifs de dérivation (1307, 1308) et/ou par le chauffage spontané est insuffisante pour maintenir la température externe de la batterie (101) dans une plage de température prédéterminée.

26. Système de batteries selon la revendication 24 ou 25, dans lequel le système de charge de batterie est adapté pour dériver le courant de charge d'une des cellules de batterie (101, 1301, 1302) lorsqu'une tension mesurée aux bornes de la susdite cellule de batterie (101, 1301, 1302) est égale ou supérieure à une tension de cellule maximale présélectionnée.
